# NEUE EUROPÄISCHE PATENTSCHRIFT

(11) **EP 1 259 188 B2**
(45) Veröffentlichungstag und Bekanntmachung des Hinweises auf die Entscheidung über den Einspruch: **12.11.2014**
(45) Hinweis auf die Patenterteilung: 11.03.2009
(21) Anmeldenummer: 01900002.5
(22) Anmeldetag: 03.01.2001
(51) Int. Cl.: A61C 8/00

(54) **ENOSSALES DENTALIMPLANTAT**
INTRAOSTEAL DENTAL IMPLANT
IMPLANT DENTAIRE INTRA-OSSEUX

(30) Priorität: 04.01.2000 CH 12002000; 17.08.2000 CH 159100
(43) Veröffentlichungstag der Anmeldung: 27.11.2002
(73) Patentinhaber: Straumann Holding AG, 4437 Waldenburg (CH)
(72) Erfinder: SCHÄR, Alex, CH-4125 Riehen (CH); BAUMGARTNER, Reto, CH-4412 Nuglar (CH); MUNDWILER, Ulrich, CH-4456 Tenniken (CH); SOLER, Christoph, CH-4222 Zwingen (CH)
(74) Vertreter: Modiano, Micaela Nadia
(86) Internationale Anmeldenummer: PCT/CH2001/000003
(87) Internationale Veröffentlichungsnummer: WO 2001/049199

(56) Entgegenhaltungen:
- EP-A- 1 013 236
- WO-A-00/32134
- WO-A-98/42273
- FR-A- 2 317 904
- US-A- 5 417 568
- US-A- 5 588 838
- US-A- 5 636 989
- US-A- 5 908 298
- US-A- 5 947 733
- WENNERBERG A ET AL: "Experimental study of turned and grit-blasted screw-shaped implants with special emphasis on effects of blasting material and surface topography" BIOMATERIALS,GB,ELSEVIER SCIENCE PUBLISHERS BV., BARKING, Bd. 17, Nr. 1, 1996, Seiten 15-22, XP004032822 ISSN: 0142-9612

## Beschreibung

### Anwendungsgebiet der Erfindung

Die vorliegende Erfindung betrifft ein enossales Dentalimplantat sowie kombinierte Anordnungen aus einem Implantat und einem Abutment oder einer auf das Implantat aufgesetzten Mesiostruktur mit anatomisch angepasster Konfiguration für ästhetische Restaurationen, insbesondere im Frontzahnbereich. Die Erfindung bezieht sich ferner auf ein einphasiges Dentalimplantat, welches vorzugsweise nach Zahnextraktion zur Sofortimplantation geeignet ist.

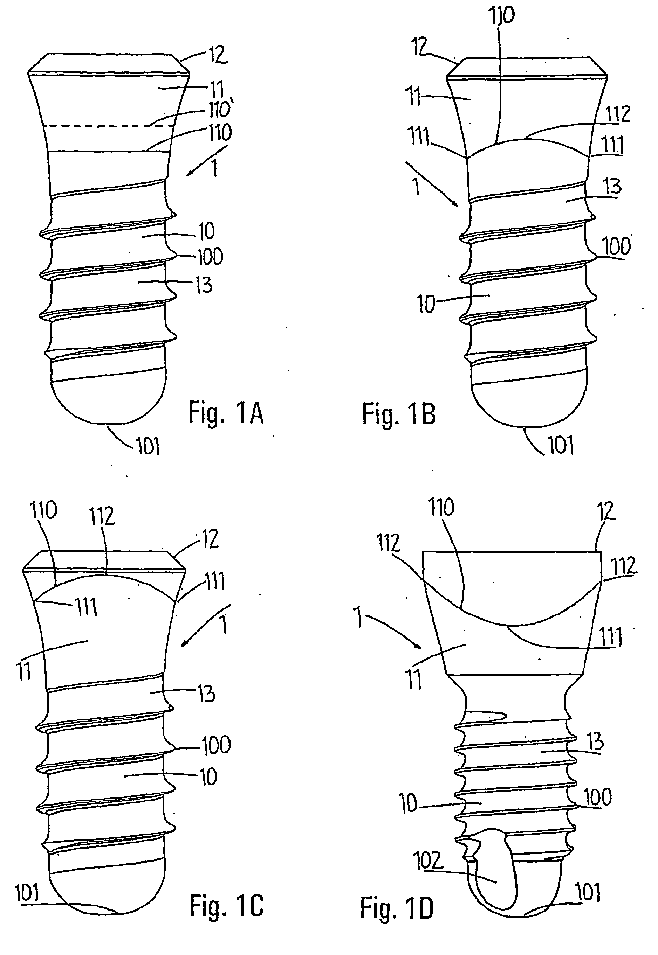

### Stand der Technik - Figur 1A

Aus der Monographie von SCHROEDER/SUTTER/BUSER/KREKELER: Oral Implantology, Georg Thieme Verlag Stuttgart und New York, 2. Aufl., 1996, S. 128, ist ein Implantat bekannt, wie es mit Bezug auf die Figur 1A nachstehend beschrieben ist. Das in einen Kieferknochen transgingival einzusetzende Implantat **1** weist eine sich nach apikal erstreckende Schaftpartie **10,** an der ein Aussengewinde **100** vorhanden sein kann, und die zuunterst mit der Implantatspitze **101** abschliesst, auf. An die Schaftpartie **10** setzt ein Implantathals **11** an, der zuoberst mit einer Implantatschulter **12** abschliesst, die sich nach koronal konisch verjüngt. Zur Begünstigung der Osseointegration ist eine additive und/oder nicht-additive Oberflächenstrukturierung **13** vorgesehen, die sich über die Schaftpartie **10** bis zu einer auf dem Implantathals **11** gelegenen horizontalen Strukturgrenze **110** erstreckt. Beispielsweise liegt die Strukturgrenze **110,** die nach dem Implantieren etwa in Höhe des Kieferkamms zu liegen kommt, in einem Abstand von 2.8 mm unterhalb der Oberkante der Implantatschulter. Bei Implantaten **1** für besondere ästhetische Ansprüche, die bei gegebenen anatomischen Voraussetzungen tiefer in den Kieferknochen eingesetzt werden (semisubmerged), liegt die horizontale Strukturgrenze **110'** z.B. 1.0 mm höher. Zur Begünstigung der Osseointegration, also einer stabilen Langzeitverankerung des Implantats, wäre eine möglichst grossflächige Oberflächenstrukturierung zur zellulären Verbindung zwischen dem Kieferknochen und der Implantatoberfläche wünschenswert. Andererseits sind bei einer koronal zu hoch liegenden Strukturgrenze bei transgingival oder semisubmerged gesetzten Implantaten die ästhetischen Wünsche nicht gänzlich erfüllbar. Siehe hierzu das US 5,588,838 mit dem am Implantathals bis zur Implantatschulter vorgesehenen mehrgängigen Feingewinde.

Neben dem Problem der Grenzziehung bei der Oberflächenstrukturierung am koronalen Implantathals besteht ferner das Problem, bei gesetzten Implantaten die Implantatschulter nicht sichtbar werden zu lassen, zugleich jedoch den umgebenden Kieferknochen optimal zu stützen. Für ausreichend tief gesetzte Implantate wurden verschiedene Abutments mit anatomisch angepasster Formgebung vorgeschlagen (siehe z.B. DE 195 34 979 C1, DE 196 07 427 A1, DE 196 20 394 C1, US 5,417,568 und WO 99/02102). Bei semisubmerged oder erst recht bei transgingival gesetzten Implantaten besteht aber weiterhin das Risiko der unvollständigen Überdeckung der Implantatschulter und damit der ästhetischen Beeinträchtigung.

Aus der EP 0 868 889 A1 ist bekannt, zur Anpassung an den Verlauf des Kieferknochens, am Implantatkopf zweiseitig eine Anschrägung vorzusehen. Die DE 198 03 172 A1 offenbart ein subgingivales Kieferimplantat mit am Implantatkopf nach anterior und posterior abfallenden Flanken. Damit wird eine partielle, jedoch noch keine gesamthafte Problemlösung erbracht.

Ein Kieferimplantat mit abgeschrägten Randbereichen wird in WO 98/42273 offenbart.

### Aufgabe der Erfindung

Angesichts der fortbestehenden Unvollkommenheiten liegt der Erfindung die Aufgabe zugrunde, ein enossales Dentalimplantat vorzuschlagen, das den Erfordernissen der Primär- und Sekundärstabilität sowie der Zielstellung bei ästhetischen Restaurationen, insbesondere im Frontzahnbereich, gesamthaft nachkommt. Für den Langzeiterfolg gilt es eine maximale Osseointegration zu erreichen und zugleich für die Bewahrung der Ästhetik über einen langen Zeitraum, müssen die Knochenlamellen im approximalen Bereich gestützt werden, um die dort vorhandenen Papillen zu erhalten. Zur Reduzierung des operativen Aufwandes, vorrangig zur Verkürzung der Behandlungszeit für den Patienten und zu seiner raschen Versorgung mit künstlichem Zahnersatz, hat sich die Erfindung ferner die Aufgabe gestellt, ein Implantat vorzuschlagen, das insbesondere nach erfolgter Zahnextraktion zur Sofortimplantation geeignet ist.

### Übersicht über die Erfindung

Das enossales Dentalimplantat mit anatomisch angepasster Konfiguration besitzt zunächst eine sich nach apikal erstreckende Schaftpartie, an der ein Aussengewinde vorhanden sein kann, und die zuunterst mit der Implantatspitze abschliesst. An die Schaftpartie setzt ein Implantathals an, der zuoberst mit einer Implantatschulter abschliesst. Zur Begünstigung der Osseointegration erstreckt sich eine additive und/oder nicht-additive Oberflächenstrukturierung über die Schaftpartie bis zu einer auf dem Implantathals gelegenen Strukturgrenze. Das Implantat ist zum Einsetzen in einen Kieferknochen bis etwa in Höhe dieser Strukturgrenze bestimmt ist. Die Strukturgrenze fällt nach anterior in apikale Richtung bis zu einer Tiefenlage ab und steigt zu den approximalen Implantatflanken hin bis zu einer Höhenlage an.

Für die Formgebung der Implantatschulter werden verschiedene Alternativen vorgeschlagen:
a) von anterior nach posterior konvex, wodurch über die approximale Erstreckung ein Wellenkamm und auf der anterioren sowie posterioren Implantatseite jeweils mittig ein unterer Scheitelpunkt entstehen; oder
b) über die approximale Erstreckung konkav, wodurch auf beiden approximalen Seitenflanken jeweils ein oberer Scheitelpunkt und auf der anterioren sowie posterioren Implantatseite jeweils mittig ein unterer Scheitelpunkt entstehen; oder
c) von anterior nach posterior konvex sowie über die approximale Erstreckung konkav, wodurch auf beiden approximalen Seitenflanken jeweils ein oberer Scheitelpunkt und auf der anterioren sowie posterioren Implantatseite jeweils mittig ein unterer Scheitelpunkt entstehen; oder
d) radial wellenförmig umlaufend, wodurch auf beiden approximalen Seitenflanken jeweils ein oberer Scheitelpunkt und auf der anterioren sowie posterioren Implantatseite jeweils mittig ein unterer Scheitelpunkt entstehen.

Die Implantatschulter nimmt erfindungsgemäß mit der vertikalen Mittelachse des Implantats einen rechten Winkel ein, erstreckt sich also horizontal

Erfindungsgemäß weist das Implantat eine sich von koronal axial nach apikal erstreckende sacklochförmige Aufnahmebohrung auf, deren Mündung von der Implantatschulter umrandet ist. Die Aufnahmebohrung hat oben eine sich nach koronal erweiternde Konusaufnahme und darunter eine Innengewindebohrung. Innerhalb der Konusaufnahme ist eine nicht-rotationssymmetrische Innenkontur vorhanden, vorzugsweise ein Innenvielkant. Zum Einsetzen in die Aufnahmebohrung ist ein abgewandeltes Abutment-vorgesehen. Dieses Abutment hat einen zur Konusaufnahme und der Innenkontur komplementären Fortsatz mit einer passenden äusseren Gegenkontur, vorzugsweise ein Aussenvielkant. Vom Fortsatz erstreckt sich nach koronal die verlängernde und sich verdickende Abutmentbasis, von der sich ein Stumpf erhebt, der von einer oben auf der Abutmentbasis gelegenen Basisschulter umgeben wird, auf welche die zu schaffende Zahnkrone direkt oder indirekt aufsitzt. Ein axialer Schraubendurchgang durch das Abutment mit einem intern gelegenen Schraubensitz dient zur Aufnahme einer von koronal einsetzbaren Abutmentschraube mit ihrem Schraubenkopf. Der Gewindeschaft der Abutmentschraube ist zum Eingreifen in die Innengewindebohrung im Implantat bestimmt. Die Basisschulter ist im kongruenten Abstand zur Implantatschulter geformt oder ist auf der posterioren Implantatseite erhöht. Der Implantathals an der Implantatschulter endet im Prinzip zylindrisch und die Strukturgrenze für die Oberflächenstrukturierung endet an der Implantatschulter oder darunter.

Nachfolgend werden spezielle Ausführungsformen beschrieben:
Die Strukturgrenze fällt von den approximalen Implantatflanken bogenförmig nach anterior und posterior in apikale Richtung bis zu scheitelpunktförmigen Tiefenlagen ab. Somit verläuft die Strukturgrenze auf den beiden approximalen Implantatflanken sowie auf dessen anteriorer und posteriorer Seite symmetrisch zueinander.

Vorzugsweise liegt der Scheitelpunkt auf der posterioren Implantatseite nach koronal höher als der Scheitelpunkt auf der anterioren Implantatseite.

Das Implantat besteht aus Titan oder einer Titanbasis-Legierung.
Die Oberflächenstrukturierung ist gebildet durch:
a) einen Materialauftrag, z.B. aufgesprühtes Titanplasma; oder
b) einen Materialabtrag, z.B. durch chemische oder elektro-chemische Behandlung mit eventuellem zusätzlichen Strahlen, z.B. mittels Korund; oder
c) einen Materialabtrag durch spanende Behandlung; oder
d) eine Materialverformung, z.B. Einprägen; oder
e) eine Kombination aus mehreren der vier vorgenannten Behandlungen.

Oberhalb der Strukturgrenze ist der Implantathals bis zur Implantatschulter im Prinzip glatt. Die Oberflächenstrukturierung an der Schaftpartie und am Implantathals können verschieden sein. Zur Oberflächenstrukturierung am Implantathals kann ein Gewinde, insbesondere ein mehrgängiges Aussengewinde, hinzukommen, das mit der Steigung des als Option an der Schaftpartie vorhandenen Aussengewindes korrespondiert und vorzugsweise eine Gewindetiefe von 0.2 mm bis 0.3 mm besitzt. Die Schaftpartie ist zylindrisch und der Implantathals erweitert sich nach koronal konisch. Das Aussengewinde an der Schaftpartie ist vorzugsweise selbst-schneidend.

Die Strukturgrenze folgt dem Verlauf des äusseren Randes der Implantatschulter in gleichmässigem Abstand, der vorzugsweise 1.0 mm bis 2.0 mm beträgt. Zur Verminderung des anterioren-posterioren Masses im Bereich der Implantatschulter ist auf der anterioren und posterioren Seite des Implantats, vorzugsweise über den Abstand, Material abgetragen.

Als Träger für eine Suprakonstruktion ist ein auf die Implantatschulter aufsetzbares und fixierbares Abutment vorgesehen, das eine Scheibe besitzt und einen nach koronal ragenden Stumpf zur Verankerung der Suprakonstruktion aufweisen kann. Vorzugsweise besteht das Abutment, zumindest die Scheibe aus einer farblich mit den Nachbarzähnen und der Mukosa harmonierenden Keramik bzw. Kunststoff. Mittels einer Basisschraube, deren Gewindeschaft in eine im Implantat vorhandene Innengewindebohrung eingreift, ist das Abutment auf der Implantatschulter aufsitzend, zu fixieren. Das Abutment besitzt unterhalb der Scheibe einen hülsenförmigen Fortsatz, in welchem sich der Schraubenkopf der Basisschraube auf einem Stützring abstützt. Der Schraubenkopf weist eine Eingriffskontur auf, die von koronal durch das Abutment durch einen Zugang mit einem Eindrehwerkzeug erreichbar ist. Der Schraubenkopf der Basisschraube sowie der Stützring sind von apikaler Richtung in den Fortsatz eingesetzt. Der Stützring ist im Fortsatz fixiert. Die Innengewindebohrung im Implantat ist innerhalb einer sich von koronal axial nach apikal erstreckenden sacklochförmigen Aufnahmebohrung angeordnet, deren Mündung von der Implantatschulter umrandet ist.

Die Kombination setzt sich aus einem enossalen Dentalimplantat und einem Abutment mit anatomisch angepasster Konfiguration zusammen. Das Implantat hat eine sich nach apikal erstreckende Schaftpartie, an der ein Aussengewinde vorhanden sein kann, und die zuunterst mit der Implantatspitze abschliesst. Das Implantat besitzt ferner einen an die Schaftpartie ansetzenden zylindrischen oder konischen Implantathals, der zuoberst mit einer Implantatschulter abschliesst. Die Implantatschulter nimmt im Verhältnis zur vertikalen Mittelachse einen rechten Winkel ein. Zur Begünstigung der Osseointegration erstreckt sich eine additive und/oder nicht-additive Oberflächenstrukturierung über die Schaftpartie bis zu einer auf dem Implantathals gelegenen Strukturgrenze. Als Träger für eine Suprakonstruktion ist ein auf die Implantatschulter aufsetzbares und fixierbares Abutment vorgesehen. Das Abutment besitzt eine Scheibe, deren Unterbau auf der Implantatschulter aufsitzt und deren Dachpartie sich mit Neigung von den erhöhten approximalen Seitenflanken zu einer anterior und posterior gelegenen Absenkung wölbt. Mittels einer Basisschraube, deren Gewindeschaft in eine im Implantat vorhandene Innengewindebohrung eingreift, ist das Abutment auf der Implantatschulter aufsitzend, fixierbar.

Dieses Abutment einer weiteren Ausführungsform besitzt unterhalb der Scheibe einen hülsenförmigen Fortsatz, in welchem sich der Schraubenkopf der Basisschraube auf einem Stützring abstützt. Der Schraubenkopf hat eine Eingriffskontur, die von koronal durch das Abutment durch einen Zugang mit einem Eindrehwerkzeug erreichbar ist. Der Schraubenkopf der Basisschraube sowie der Stützring sind von apikaler Richtung in den Fortsatz eingesetzt, wobei der Stützring im Fortsatz fixiert ist. Die Innengewindebohrung ist im Implantat innerhalb einer sich von koronal axial nach apikal erstreckenden sacklochförmigen Aufnahmebohrung angeordnet, deren Mündung von der Implantatschulter umrandet ist. Unterhalb der Mündung der Aufnahmebohrung ist im Implantat eine Positionierkontur vorgesehen ist, und am Fortsatz des Abutment sind in die Positionierkontur eingreifende Nocken vorhanden.

Das Implantat besteht wiederum aus Titan oder einer Titanbasis-Legierung und weist eine Oberflächenstrukturierung bis zur Strukturgrenze auf. Zur Oberflächenstrukturierung am Implantathals kann ein Gewinde, insbesondere ein mehrgängiges Aussengewinde, hinzukommen, das mit der Steigung des als Option an der Schaftpartie vorhandenen Aussengewindes korrespondiert und vorzugsweise eine Gewindetiefe von 0.2 mm bis 0.3 mm besitzt. Jetzt verläuft die Strukturgrenze der Oberflächenstrukturierung vorzugsweise am äusseren Rand der Implantatschulter. Ein von der Oberseite der Scheibe nach koronal ragender Stumpf dient zur Verankerung der Suprakonstruktion. Das Abutment, zumindest dessen Scheibe, bestehen vorteilhaft aus einem farblich mit den Nachbarzähnen und der Mukosa harmonierenden Material, vorzugsweise Keramik oder Kunststoff.

In der vorzugsweisen Bestimmung als sogenanntes einphasiges Sofortimplantat weist dieses eine sich nach apikal erstreckende konisch-zylindrische Schaftpartie auf, an der ein Aussengewinde vorhanden ist, und die zuunterst mit der Implantatspitze abschliesst. An der Schaftpartie setzt der Implantathals an, der zuoberst mit einer konischen, horizontal verlaufenden Implantatschulter abschliesst. Zur Begünstigung der Osseointegration erstreckt sich eine additive und/oder nicht-additive Oberflächenstrukturierung über die Schaftpartie bis zu einer Strukturgrenze, an deren Position der Implantathals ansetzt. Das Implantat wird in der Regel in den Kieferknochen bis etwa in Höhe der Strukturgrenze eingesetzt, welche im Abstand unterhalb der Implantatschulter horizontal verläuft. Die Schaftpartie ist im apikalen Bereich zylindrisch, während sie sich nach koronal konisch erweitert. Das Aussengewinde kann sich im Bereich des Übergangs zum konischen Schaftanteil in unveränderter oder veränderter Form bis an die Strukturgrenze fortsetzen.

In einer ersten Ausführungsform hat dieses Implantat intern des Implantathalses eine axiale Konusaufnahme mit einem Innenvielkant und einer darunter liegendenden sacklochförmigen Innengewindebohrung. Bei einer zweiten Ausführungsform ist ein die Implantatschulter überragender, axial austretender Verbindungskopf vorgesehen. Dieser Verbindungskopf hat in einer bevorzugten Ausführungsform einen Aussenvielkant, einen sich nach oben verjüngenden Konusabschnitt und zuoberst einen zylindrischen Führungsabschnitt. Von koronal erstreckt sich eine sacklochförmige Innengewindebohrung in den Implantathals hinein. Der Bereich zwischen der Strukturgrenze und der Implantatschulter ist maschinell glatt, d.h. hier ist die spezielle mikrorauhe Oberflächenstrukturierung nicht vorhanden.

### Kurzbeschreibung der beigefügten Zeichnungen

Es zeigen:
- Figur 1A:: ein Schraubenimplantat mit einer nach koronal sich konisch verjüngenden Implantatschulter und einer gemäss dem Stand der Technik radial um den konischen Implantathals umlaufenden Strukturgrenze;
- Figur 1B:: ein Implantat gemäss Figur 1A mit einer bogenförmigen Strukturgrenze, etwa in mittlerer Höhe des Implantathalses, in approximaler Betrachtung;
- Figur 1C:: die Darstellung gemäss Figur 1B mit der bogenförmigen Strukturgrenze, nahe unterhalb der Implantatschulter;
- Figur 1 D:: ein Schraubenimplantat mit einer horizontalen Implantatschulter und einer wellenförmigen Strukturgrenze, nahe unterhalb der Implantatschulter, in anteriorer Betrachtung welcher kein Gegenstand der beanspruchte Erfindung ist.
- Figur 2A:: ein Implantat mit einer von anterior nach posterior konvex geformten Implantatschulter; einer Strukturgrenze, nahe unterhalb der Implantatschulter und einem Aussengewinde am Implantathals, als Perspektivansicht;
- Figur 2B:: die Darstellung gemäss Figur 2A in approximaler Betrachtung;
- Figur 2C:: das Implantat gemäss Figur 2A, in anteriorer Betrachtung, im vertikalen Teilschnitt;
- Figur 2D:: das Implantat gemäss Figur 2A im vertikalen Teilschnitt, als Perspektivansicht;
- Figur 2E:: das Implantat gemäss Figur 2A mit gewindefreiem Implantathals, in anteriorer Betrachtung;
- Figur 3A:: das Implantat gemäss Figur 2A mit einer in approximaler Erstreckung konkav geformten Implantatschulter, im Teilschnitt, als Perspektivansicht;
- Figur 3B:: das Implantat gemäss Figur 3A in approximaler Betrachtung;
- Figur 3C:: das Implantat gemäss Figur 3A in anteriorer Betrachtung;
- Figur 3D:: das Implantat gemäss Figur 3A in anteriorer Betrachtung, im vertikalen Teilschnitt;
- Figur 3E:: das Implantat gemäss Figur 3A in der Draufsicht;
- Figur 4A:: ein Implantat mit einer von anterior nach posterior konvex geformten Implantatschulter und einem aufgesetzten Abutment, als Perspektivansicht;
- Figur 4B:: die Darstellung gemäss Figur 4A in approximaler Betrachtung, im vertikalen Teilschnitt;
- Figur 4C:: die Anordnung gemäss Figur 4A mit abgehobenem Abutment, im vertikalen Teilschnitt;
- Figur 5A:: ein Implantat mit zylindrischem Implantathals, einer von anterior nach posterior konvex geformten Implantatschulter und einem eingesetzten Abutment;
- Figur 5B:: die Anordnung gemäss Figur 5A als Explosivdarstellung in perspektivischer Sicht;
- Figur 5C:: die Darstellung gemäss Figur 5B im vertikalen Teilschnitt;
- Figur 5D:: die Anordnung gemäss Figur 5A mit aufgebrachter Zahnkrone, im vertikalen Teilschnitt;
- Figur 6A:: das Implantat gemäss Figur 5A mit konischem Halsübergang und einer auf die Implantatschulter aufgesetzten Mesiostruktur, bestehend aus Ring und Implantateinsatz, als Perspektivdarstellung;
- Figur 6B:: die Anordnung gemäss Figur 6A in approximaler Betrachtung, im vertikalen Teilschnitt;
- Figur 6C:: die Anordnung gemäss Figur 6A als Explosivdarstellung in perspektivischer Sicht;
- Figur 6D:: die Anordnung gemäss Figur 6A als Explosivdarstellung, in anteriorer Betrachtung;
- Figur 6E:: die Darstellung gemäss Figur 6D, in approximaler Betrachtung;
- Figur 7A:: das Implantat gemäss Figur 4A mit einem auf die Implantatschulter aufsetzbaren Ring und einem Implantateinsatz, in perspektivischer Sicht, als Explosivdarstellung;
- Figur 7B:: die Anordnung gemäss Figur 7A in anteriorer Betrachtung, als Explosivdarstellung;
- Figur 7C:: die Darstellung gemäss Figur 7B, in approximaler Betrachtung;
- Figur 8:: eine Prinzipdarstellung eines Implantats mit einer zirkulär, wellenförmig umlaufenden, sich horizontal erstreckenden Implantatschulter;

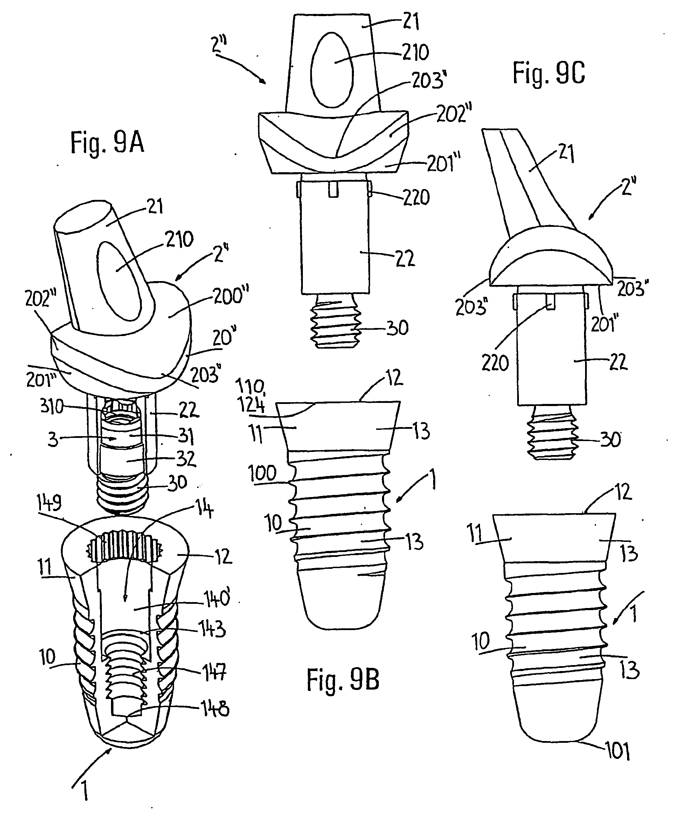

- Figur 9A:: das Implantat gemäss Figur 1D mit einen internen Raster und komplementärem abgehobenen Abutment, als Perspektivansicht welcher kein Gegenstand der beanspruchte Erfindung ist.
- Figur 9B:: die Anordnug gemäss Figur 9A, in anteriorer Betrachtung;
- Figur 9C:: die Darstellung gemäss Figur 9B, in approximaler Betrachtung;
- Figur 10A:: ein Implantat mit zylindrisch-konischer Schaftpartie, horizontal liegender konischer Implantatschulter und horizontal verlaufender Strukturgrenze, im vertikalen Teilshnitt welcher kein Gegenstand ist der beanspruchte Erfindung.
- Figur 10B:: das Implantat gemäss Figur 10A mit grösserem Durchmesser; und
- Figur 10C:: das Implantat gemäss Figur 10A, mit einem die Implantatschulter überragenden Verbindungskopf.

### Ausführungsbeispiele

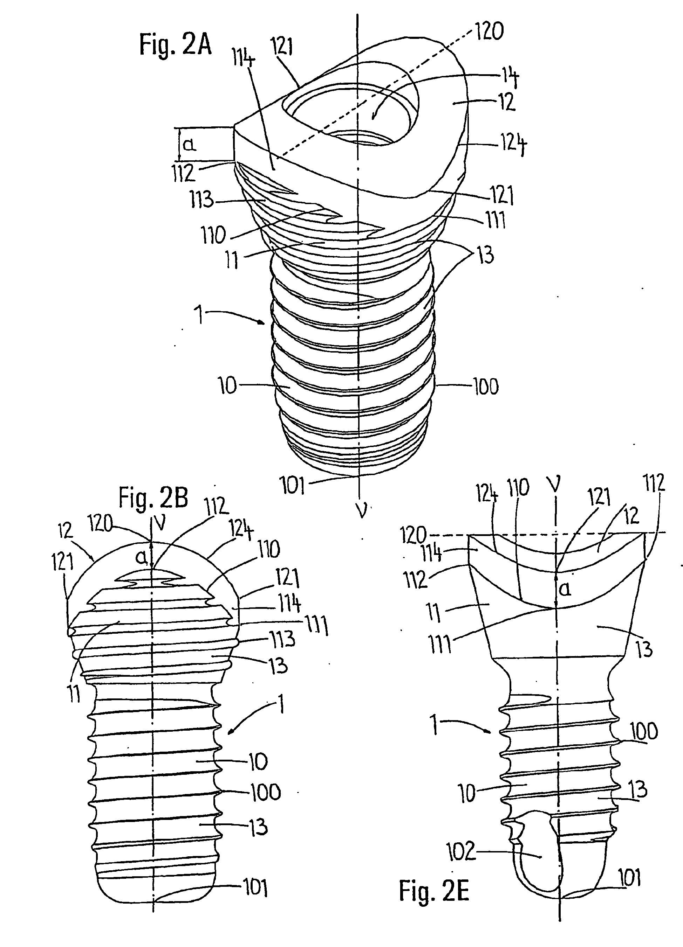

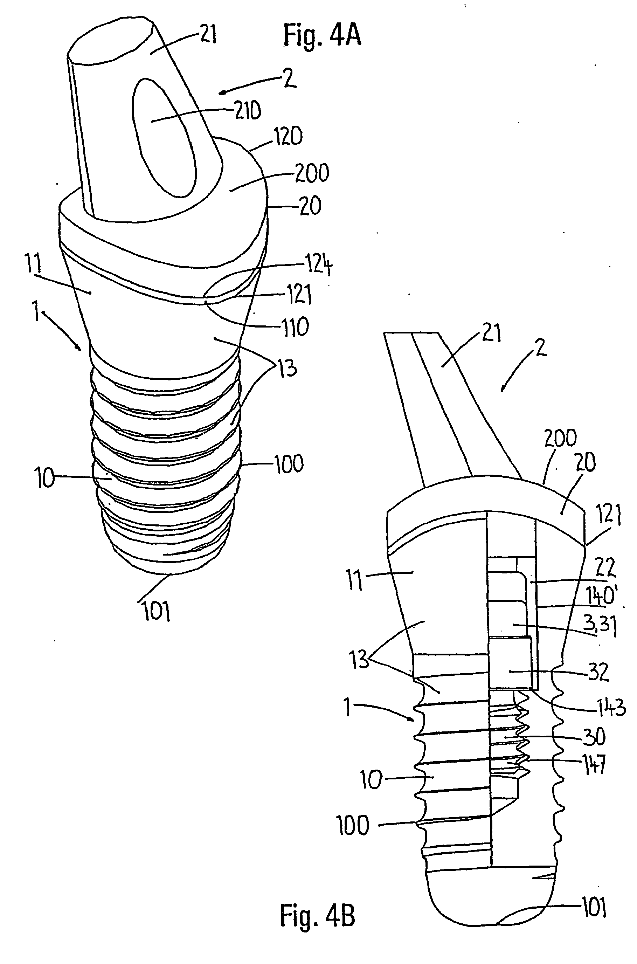

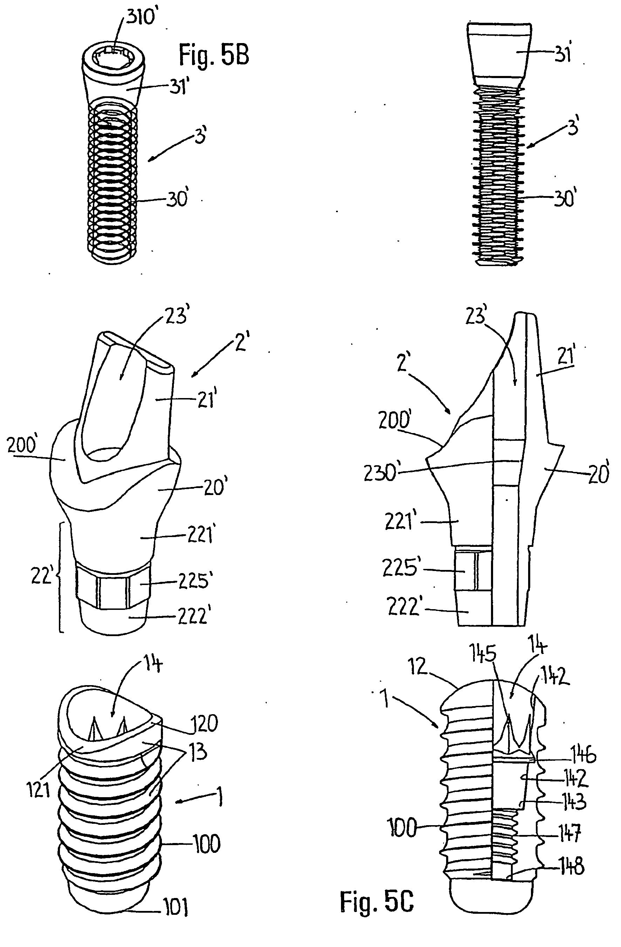

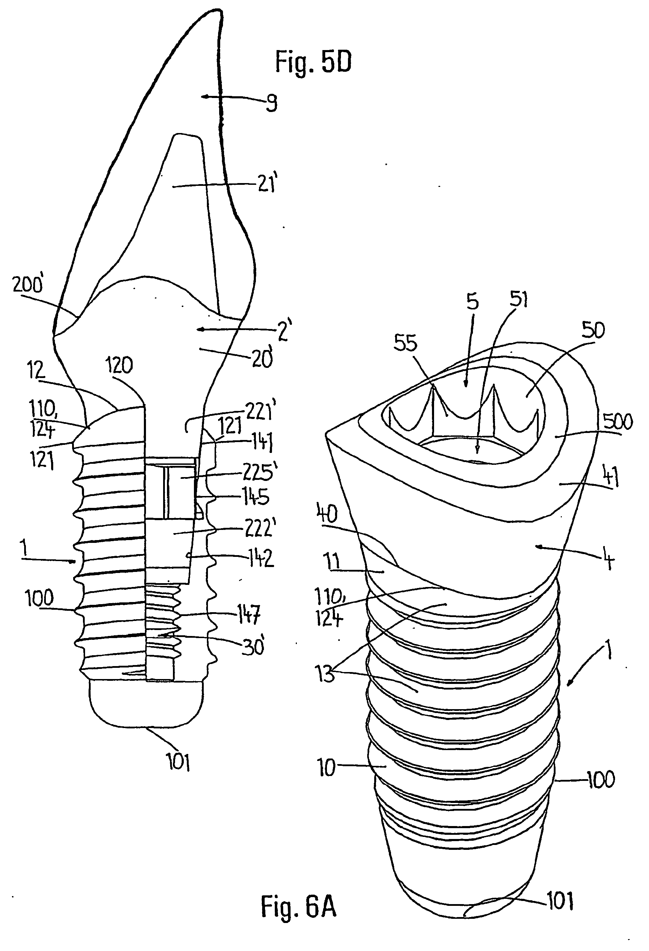

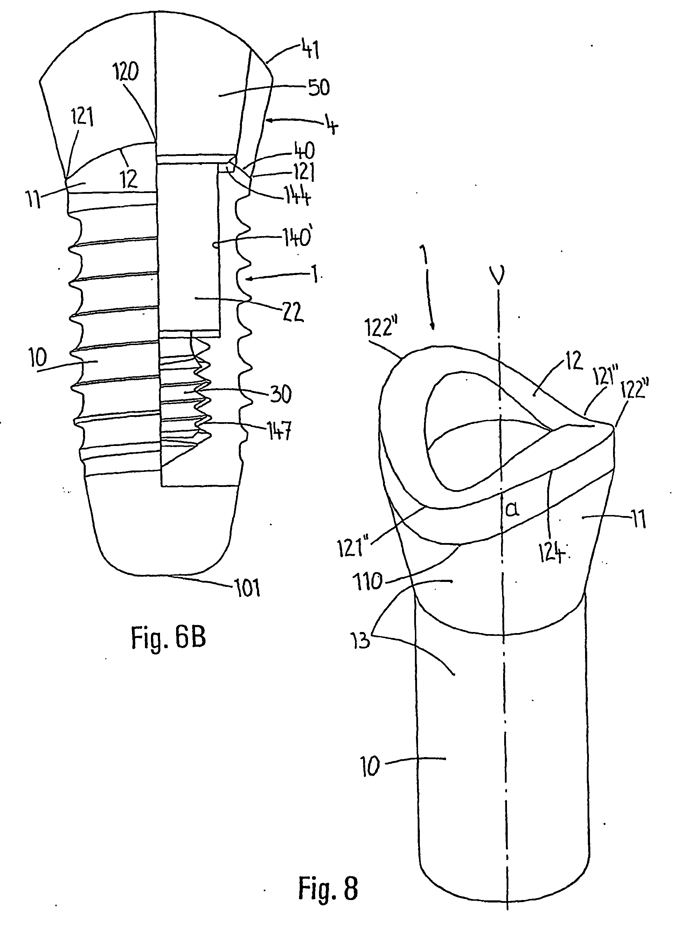

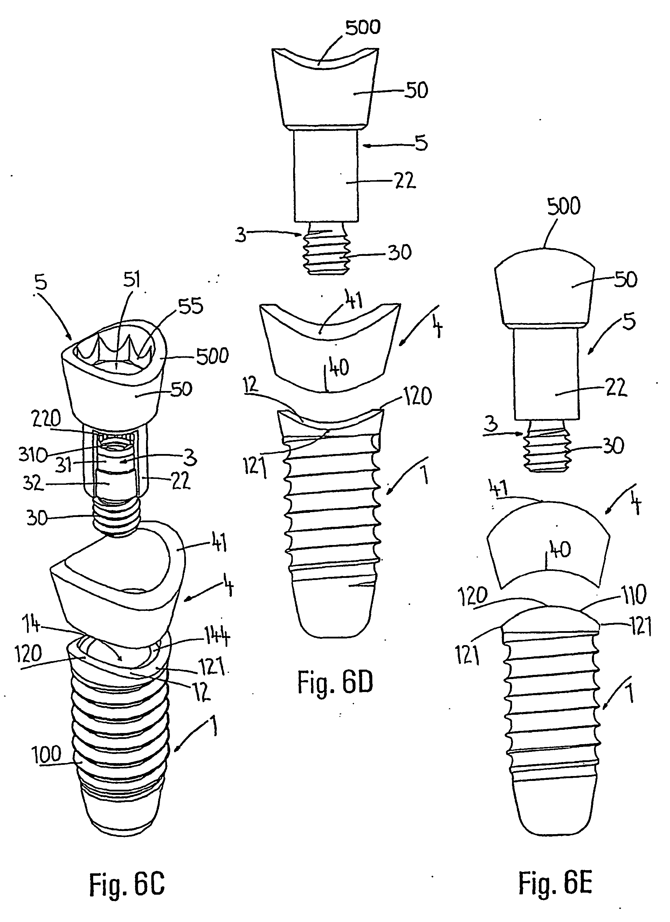

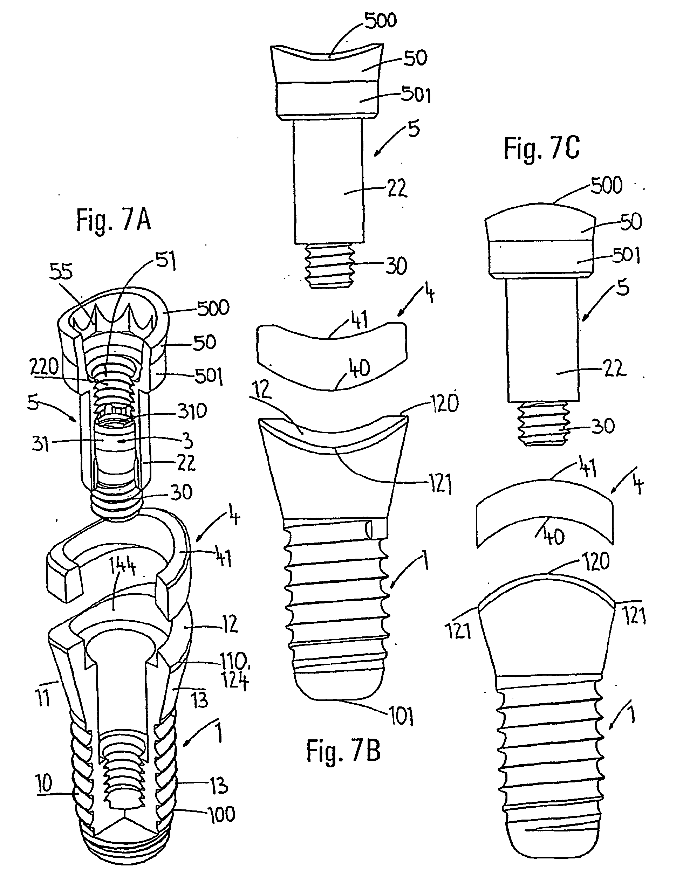

Die Ausführungsformen der Figuren 2A bis 7C sind nicht ein Teil der beanspruchten Erfindung, sofern sie eine von der Ausführungsform der Fig 8 abweichende Implantatschulter zeigen. Darüber hinaus sind die Ausführungsformen der Figuren 4A bis 4C bzw. 7A bis 7C nicht ein Teil der beanspruchten Erfindung, sofern das Merkmal einer Zylinderbohrung bzw. einer zylindrischen Aussparung anstelle einer Konusaufnahme in der Aufnahmebohrung des Implantats gezeigt wird.

Anhand der beiliegenden Zeichnungen erfolgt nachstehend die detaillierte Beschreibung von Ausführungsbeispielen zur erfindungsgemässen Verbindungsanordnung.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figur 1B

Das mit Blick auf eine approximale Flanke dargestellte schraubenförmige enossale Implantat **1** besitzt eine sich nach apikal erstreckende zylindrische Schaftpartie **10,** die zuunterst mit der rundlichen Implantatspitze **101** abschliesst und das Aussengewinde **100** aufweist, welches selbst-schneidend sein kann. Von der Schaftpartie **10** axial nach koronal erstreckt sich der trompetenförmig erweiternde Implantathals **11,** der zuoberst mit der Implantatschulter **12** abschliesst. Die Implantatschulter **12** verjüngt sich nach koronal konisch und umgibt die Mündung einer sich axial abwärts erstreckenden Aufnahmebohrung (nicht sichtbar).

Zur Begünstigung der Osseointegration ist eine additive und/oder nicht-additive Oberflächenstrukturierung **13,** die sich über die Schaftpartie **10** bis zu einer auf dem Implantathals **11** gelegenen Strukturgrenze **110** erstreckt, vorgesehen. Das Implantat **1** ist zum Einsetzen in einen Kieferknochen bis etwa in Höhe der Strukturgrenze **110** bestimmt, die von den approximalen Implantatflanken bogenförmig nach anterior in apikaler Richtung bis zu einer Tiefenlage **111** abfällt und zu den approximalen Implantatflanken hin bis zu einer Höhenlage **112** ansteigt. Hierdurch erhält die Tiefenlage **111** die Gestalt eines unteren Scheitelpunkts. Ebenso fällt die Strukturgrenze **110** von den approximalen Implantatflanken bogenförmig nach posterior in apikale Richtung bis zur scheitelpunktförmigen Tiefenlage **111** ab. Somit verläuft die Strukturgrenze **110** auf den beiden approximalen Implantatflanken sowie auf dessen anteriorer und posteriorer Seite symmetrisch zueinander. Auf der posterioren Implantatseite könnte die Strukturgrenze **110** nach koronal höher liegen als auf der anterioren Implantatseite.

Das Implantat **1** besteht vorzugsweise aus Titan oder einer Titanbasis-Legierung. Zur Bildung der Oberflächenstrukturierung **13** sind verschiedene Verfahren bekannt. Hierfür kommen ein Materialauftrag, z.B. aufgesprühtes Titanplasma, oder ein Materialabtrag, z.B. durch spanende, chemische oder elektro-chemische Behandlung mit eventuellem zusätzlichen Strahlen, z.B. mittels Korund, in Betracht. Als weitere Alternative steht die Materialverformung, z.B. Einprägen, zur Verfügung. Die vorgenannten Behandlungen lassen sich auch kombinieren. Oberhalb der Strukturgrenze **110** ist der Imptantathals **11** bis zur Implantatschulter **12** im Prinzip glatt ist. Die Oberflächenstrukturierung **13** an der Schaftpartie **10** und am Implantathals **11** können verschieden sein. Am Implantathals **11** ist die Oberflächenstrukturierung **13** vorzugsweise eine Textur und insbesondere ein mehrgängiges Aussengewinde, das mit der Steigung des eventuell an der Schaftpartie **10** vorhandenen Aussengewindes 100 korrespondiert und vorzugsweise eine Gewindetiefe von 0.2 mm bis 0.3 mm besitzt.

Im implantierten Zustand kommen die Höhenlagen **112** der Strukturgrenze **110** approximal zwischen den Zähnen zu liegen, während die Tiefenlagen **111** nach anterior bzw. posterior gerichtet sind. Ist die Strukturgrenze **110** auf einer Implantatseite in Richtung der Implantatschulter **12** höher gezogen, so wird man die gegenüberliegende Implantatseite mit der darauf abgesenkt liegenden Tiefenlage **111** nach anterior positionieren.

### Figur 1C

Ist das Implantat **1** zum tiefer liegenden Einsetzen in den Kieferknochen bestimmt (semisubmerged), kann man die Strukturgrenze **110** nach koronal höher vorsehen, welche wiederum von den approximalen Implantatflanken bogenförmig nach anterior in apikaler Richtung bis zu einer scheitelpunktförmigen Tiefenlage **111** abfällt und zu den approximalen Implantatflanken hin bis zu einer scheitetpunktförmigen Höhenlage **112** ansteigt. Jetzt verläuft die Höhenlage **112** nahe unterhalb der Implantatschulter **12.** Im implantierten Zustand werden die Höhenlagen **112** der Strukturgrenze **110** wiederum approximal zwischen den Zähnen liegend positioniert, während die Tiefenlagen **111** nach anterior bzw. posterior ausgerichtet sind. Eine eventuell auf einer Implantatseite abgesenkte Tiefenlage **111** wird auch hier nach anterior positioniert, während die der Implantatschulter **12** nähere Tiefenlage **111** auf der posterioren Implantatseite zu liegen kommt. Somit sollte an einem in den Patientenmund eingesetzten Implantat **1** der Ansatz der Oberflächenstrukturierung **13,** welche unterhalb der Strukturgrenze **110** beginnt, für Dritte nicht sichtbar sein. Zugleich ist die Oberflächenstrukturierung **13** auf möglichst grosser Fläche vorgesehen.

### Figur 1 D

Dieses Implantat **1 -** hier in anteriorer Betrachtung dargestellt - weist anstelle der bisherigen konischen nun eine horizontale Implantatschulter **12** auf, und der oberste Abschnitt des Implantathalses **11** ist zylindrisch. In dieser Ansicht ist eine Spannut **102** des selbst-schneidenden Aussengewindes **100** erkennbar. Die Strukturgrenze **110** ist wiederum nach koronal verschoben, wodurch die scheitelpunktförmige Höhenlage **112** nahe unterhalb der Implantatschulter **12** verläuft, während die scheitelpunktförmige Tiefenlage **111** etwa in mittlerer Höhe auf dem Implantathals **11** zu liegen kommt.

### Figuren 2A bis 2E

Dieses Implantat **1** hat ebenfalls eine sich nach apikal erstreckende zylindrische Schaftpartie **10** mit dem Aussengewinde **100** und der zuunterst abschliessenden Implantatspitze **101.** Ist das Aussengewinde **100** selbst-schneidend, wird in der Nähe der Implantatspitze **101** Spannuten **102** besitzen. An die Schaftpartie **10** setzt der sich nach koronal konisch erweiternde Implantathals **11** an, der zuoberst die Implantatschulter **12** aufweist. Zur Förderung der Osseointegration ist die Oberflächenstrukturierung **13** vorgesehen, die sich über die Schaftpartie **10** bis zur Strukturgrenze **110** erstreckt. Die lmplantatschulter **12** ist von anterior nach posterior konvex geformt ist, wodurch über die approximale Erstreckung eine Kammlinie **120** und auf der anterioren sowie posterioren Implantatseite jeweils mittig ein unterer Scheitelpunkt **121** entstehen. Auf der posterioren Implantatseite liegt der Scheitelpunkt **121** vorzugsweise nach koronal höher als auf der anterioren Impiantatseite. Die Kammlinie **120** nimmt mit der vertikalen Mittelachse **V** des Implantats **1** einen rechten Winkel ein, erstreckt sich also horizontal. Die Implantatschulter **12** könnte jedoch auch derart konfiguriert sein, dass die Kammlinie **120** von beiden approximalen Implantatflanken zur vertikalen Mittelachse **V** hin ansteigt oder abfällt.

Der Verlauf der Strukturgrenze **110** der Oberflächenstrukturierung **13** auf dem Implantathals **11** folgt mit gleichmässigem Abstand a dem Verlauf der konvex gewölbten Implantatschulter **12** bzw. deren äusserem Rand **124,** so dass die Strukturgrenze **110** bogenförmig nach anterior und posterior in apikale Richtung bis zu den Tiefenlagen **111** abfällt und über die approximale Erstreckung bis zu den Höhenlagen **112** ansteigt. Der Abstand a beträgt vorzugsweise 1.0 mm bis 3.0 mm. Oberhalb der Strukturgrenze **110** ist der Implantathals **11** bis zur Implantatschulter **12** im Prinzip glatt und endet - in Relation zur vertikalen Mittelachse **V -** mit einem zylindrischen Abschnitt **114.**

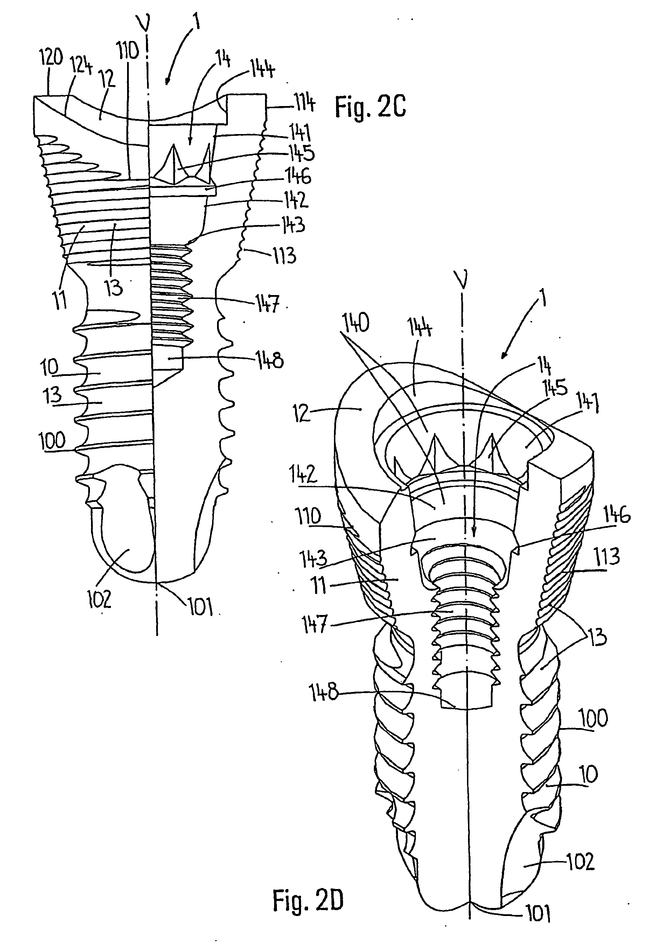

Auf dem Implantathals **11** kann in Fortsetzung des Aussengewindes **100** der Schaftpartie **10** ein mit dem Aussengewindes **100** korrespondierendes äusseres Gewinde **113** vorhanden sein. Die Figur 2E zeigt einen Implantathals **11** ohne ein Gewinde, bei den Figuren 2A und 2B hat der Implantathals **11** ein Gewinde **113,** welches dem Aussengewindes **100** entspricht, während die Figuren 2C und 2D am Implantathals **11** ein mehrgängiges Gewinde **113** zeigen, das jedoch die gleiche Steigung wie das Aussengewinde **100** aufweist. Ein mehrgängiges Gewinde **113** am Implantathals **11** hat vorzugsweise eine Gewindetiefe von 0.2 mm bis 0.3 mm. Die neben dem Aussengewinde **100** existente feinere, mikrorauhe Obetflächenstrukturierung **13** auf der Schaftpartie **10** kann sich nur über die Schaftpartie **10** erstrecken, so dass die Oberflächenstrukturierung **13** am Implantathals **11** allein vom dort vorgesehenen Gewinde **103** gebildet wird. Alternativ kann die Oberflächenstrukturierung **13** am Implantathals **11** nur aus der feineren, mikrorauhen Struktur bestehen. Vorteilhaft aber setzt sich die Oberflächenstrukturierung **13** am Implantathals **11** aus dem Gewinde **113** und der überlagernden feineren, mikrorauhen Oberflächenstrukturierung **13** zusammen, welche sich von der Implantatspitze **101** bis zur Strukturgrenze **110** erstreckt.

Das Implantat **1** weist eine sich von koronal axial nach apikal verlaufende sacklochförmige Aufnahmebohrung **14** auf, die sich in mehrere unterschiedliche Zonen unterteilt und von der Mündung, die von der Implantatschulter **12** umrandet ist, bis in die Schaftpartie **10** hinein erstreckt. Oben hat die Aufnahmebohrung **14** eine sich nach koronal erweiternde Konusaufnahme **140,** wobei unmittelbar unterhalb der Mündung eine zylindrische Aussparung **144** liegen kann. Innerhalb der Konusaufnahme **140** ist eine nicht-rotationssymmetrische Innenkontur **145 -** hier in Gestalt eines Innenvielkants **145 -** vorgesehen. Unterhalb der Innenkontur **145** liegt eine zirkuläre Ringnut **146,** die sich zur spanenden Herstellung der Innenkontur **145** empfiehlt. Der Innenvielkant **145** läuft nach oben hin in parabelförmigen Spitzen aus und liegt vorteilhaft derart innerhalb der Konusaufnahme **140,** dass sowohl über der Innenkontur **145** als auch darunter unterbrechungslose, zueinander fluchtende Konusabschnitte **141,142** entstehen. Unten endet die Konusaufnahme **140** mit dem Boden **143,** an dem die Aufnahmebohrung **14** in eine koaxiale, im Durchmesser reduzierte Innengewindebohrung **147** übergeht, die sich axial weiter nach apikal erstreckt und am Bohrungsgrund **148** endet.

Die zylindrische Schaftpartie **10** mit dem Aussengewinde **100** bewirkt die wesentliche Komponente der Primärstabilität des gesetzten Implantats **1** und der konische Anteil des Implantathalses **11** entspricht der Anatomie der Extraktionsalveole. Die Strukturgrenze **110** folgt dem Knochenniveau und die an den approximalen Flanken des gesetzten Implantats **1** vorhandenen Erhöhungen stützen die approximale Knochenstruktur, erhaltenen damit den Kieferknochen in diesen Regionen, was die Voraussetzung für den ästhetischen Erhalt der Papillen zu den benachbarten Zähnen ist.

### Figuren 3A bis 3E

Bezüglich des Verlaufs der Implantatschulter **12** liegt der Unterschied zur vorherigen Figurengruppe 2A bis 2E darin, dass nun die Implantatschulter **12** in approximaler Erstreckung konkav geformt ist. Hierdurch ergeben sich an den approximalen Seitenflanken des Implantats **1** obere Scheitelpunkte **122** und auf der anterioren sowie posterioren Implantatseite jeweils mittig ein unterer Scheitelpunkt **121'.** Die Strukturgrenze **110** folgt der Implantatschulter **12** wiederum im Abstand a. An den unteren Scheitelpunkten **121'** nimmt die Implantatschulter **12** mit der vertikalen Mittelachse **V** des Implantats **1** einen rechten Winkel ein. Hinsichtlich des übrigen äusseren und inneren Designs des Implantats 1 wird insbesondere auf die Figuren 2C und 2D verwiesen.

### Figuren 4A bis 4C

Als Träger für eine Suprakonstruktion ist ein auf die erfindungsgemäss geformte Implantatschulter **12 -** hier von anterior nach posterior konvex - aufsetzbares und auf dem Implantat 1 fixierbares Abutment **2** vorgesehen. Das Implantat **1** besitzt wiederum eine zylindrische Schaftpartie **10** und den sich nach koronal konisch erweiternden Implantathals **11.** Das Abutment **2** besteht aus einer Scheibe **20** und kann zur Verankerung der Suprakonstruktion einen nach koronal ragenden Stumpf **21** aufweisen. Vorzugsweise besteht das Abutment **2** aus einer ästhetisch unauffälligen Keramik, die farblich mit den Weichteilen harmoniert. Überdies ist Keramik kratzfest und minimiert dadurch die Anlagerung von Plaques. Das Abutment **2** besitzt unterhalb der Scheibe **20** einen hülsenförmigen Fortsatz **22,** in dem sich der Schraubenkopf **31** einer Basisschraube **3** auf einem Stützring **32** abstützt. Der Schraubenkopf **31** weist eine Eingriffskontur **310** auf, die von koronal durch das Abutment **2,** d.h. durch einen Zugang **210** im Stumpf **21** mit einem Eindrehwerkzeug erreichbar ist. Der Schraubenkopf **31** der Basisschraube **3** sowie der im Fortsatz **22** fixierte Stützring **32** sind von apikaler Richtung in den Fortsatz **22** eingesetzt. Die Aufnahmebohrung **14** ist hier vereinfacht; es entfallen die zylindrische Aussparung **144** an der Mündung, die Konusaufnahme **140** sowie die Innenkontur **145.** Anstelle der Konusaufnahme **140** ist eine sich bis zum Boden **143** erstreckende Zylinderbohrung **140'** vorhanden, unterhalb der die Innengewindebohrung **147** mit dem abschliessenden Bohrungsgrund **148** liegt. Das Abutment **2** wird mittels der Basisschraube **3,** deren Gewindeschaft **30** in die im Implantat **1** vorhandene Innengewindebohrung **147** eingreift, auf der Implantatschulter **12** aufsitzend, fixiert. Der Fortsatz **22** ragt hierbei in die Zylinderbohrung **140'** hinein.

Im implantierten Zustand weist die Implantatschulter **12** mit dem unteren Scheitelpunkt **121** nach anterior, während sich die erhöhte Kammlinie **120** approximal zwischen den Zähnen erstreckt. Auf der nach koronal gewandten Oberseite **200** der Scheibe **20** des auf dem Implantat **1** fixierten Abutment **2** wird die künstliche Krone aufgebracht, welche sich somit über das Abutment **2** auf der Implantatschulter **12** abstützt. Die Strukturgrenze **110** kann sich bis zum äusseren Rand **124** der Implantatschulter **12** erstrecken. Die Oberflächenstrukturierung **13** auf dem Implantathals **11** kann allein aus der feinen, mikrorauhen Struktur bestehen, welche an der Schaftpartie **10** vorhanden ist, oder zusätzlich ein ein- oder mehrgängiges Gewinde **113,** das mit dem Aussengewinde **100** an der Schaftpartie **10** harmoniert, aufweisen.

### Figuren 5A bis 5D

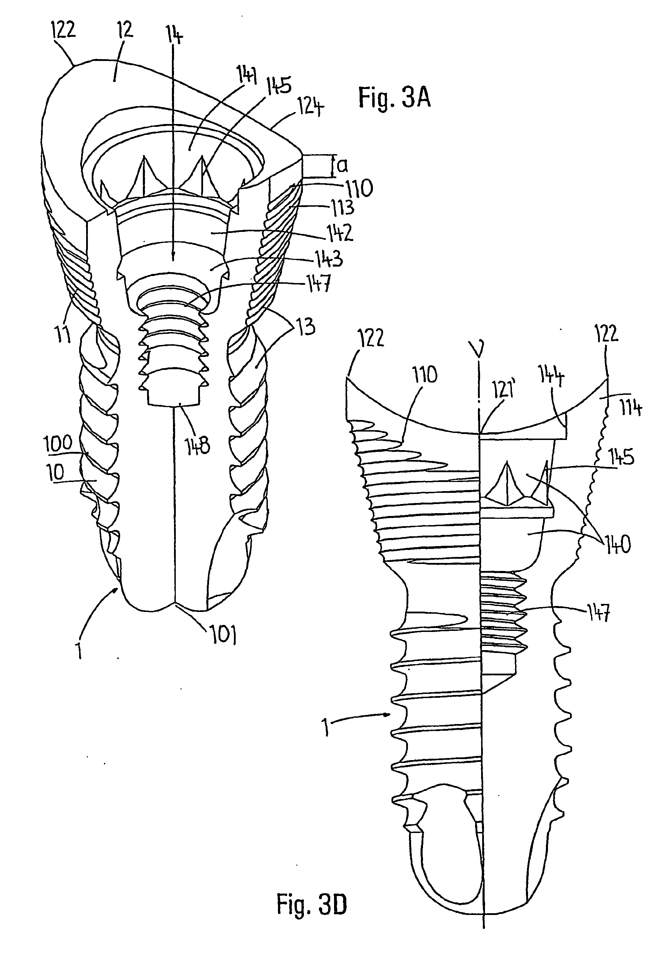

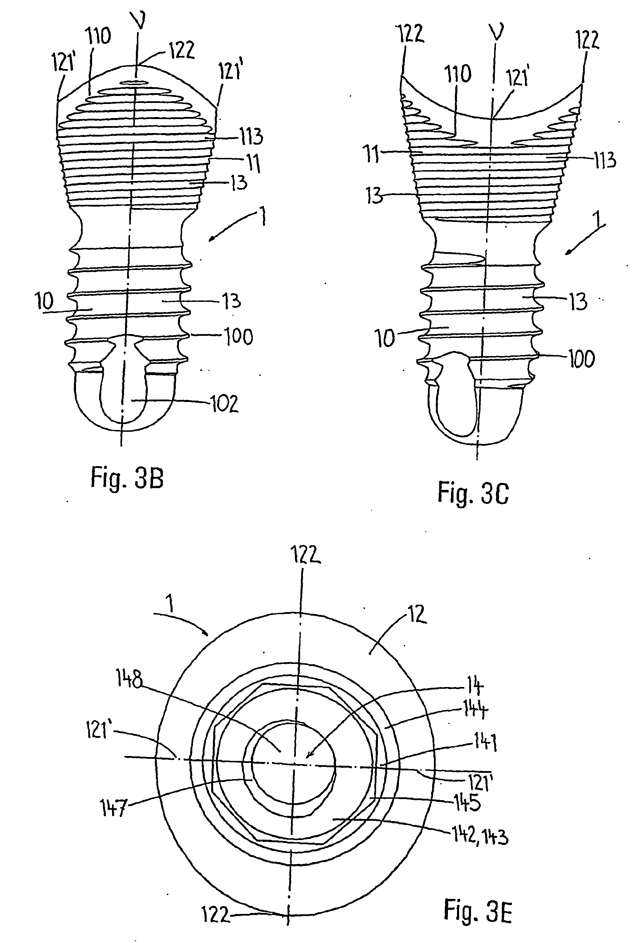

Bei diesem Implantat **1** endet der Implantathals **11** im Prinzip zylindrisch an der Implantatschulter **12,** die von anterior nach posterior konvex geformt ist und welche die sich axial in das Implantat **1** hinein erstreckende Aufnahmebohrung **14** umrandet. Im eingesetzten Zustand weisen die unteren Scheitelpunkte **121** nach anterior bzw. posterior und die erhöhte Kammlinie **120** kommt in der approximalen Erstreckung zu liegen. Die Strukturgrenze **110** der vorhandenen Oberflächenstrukturierung **13** kann erst am Rand **124** der Implantatschulter **12** oder darunter gelegen - z.B. mit 1.0 mm Versetzung - verlaufen. Das innere Design des Implantats **1** stimmt weitgehend mit der Ausführung gemäss den Figur 2C und 3A überein, es entfällt lediglich die zylindrische Aussparung **144** an der Mündung der Aufnahmebohrung **14,** so dass sich der obere Konusabschnitt **141** bis zur Mündung erstreckt. Von koronal nach apikal betrachtet, setzt sich die Aufnahmebohrung **14** somit aus dem oberen Konusabschnitt **141,** der Innenkontur **145 -** auch hier ein Innenvielkant -, der Ringnut **146,** dem unteren Konusabschnitt **142,** dem Boden **143,** der Innengewindebohrung **147** und dem abschliessenden Bohrungsgrund **148** zusammen. Der obere und der untere Konusabschnitt **149,142** bilden zusammen erneut die Konusaufnahme **140.**

Zum Einsetzen in die Aufnahmebohrung **14** ist ein Abutment **2'** vorgesehen, welches unten einen sich nach apikal erstreckenden Fortsatz **22'** aufweist, der zur Konusaufnahme **140** und zur Innenkontur **145** komplementär ist und eine passende äussere Gegenkontur **225'** besitzt. Wird die Innenkontur **145** im Implantat **1** von einem Innenvielkant gebildet, ist die Gegenkontur **225'** ein komplementärer Aussenvielkant, oberhalb und unterhalb dessen jeweils ein Konusabschnitt **221',222'** liegt. An den Fortsatz **22',** also an den oberen Konusabschnitt **221'** schliesst sich eine nach koronal erstreckende und im Prinzip konisch verdickende Abutmentbasis **20'** an, von der sich ein Stumpf **21'** erhebt. Den Stumpf **21'** umläuft die oben auf der Abutmentbasis **20'** liegende Basisschulter **200',** auf welcher die zu schaffende Zahnkrone **9** direkt oder indirekt aufsitzt.

Durch das Abutment **2'** erstreckt sich ein axialer Schraubendurchgang **23'** mit einem intern gelegenen Schraubensitz **230',** welche der Aufnahme einer von koronal einsetzbaren Abutmentschraube **3'** mit ihrem Schraubenkopf **31'** dienen. Im montierten Zustand steckt der Fortsatz **22'** in der Konusaufnahme **140,** d.h. die Gegenkontur **225'** sitzt formschlüssig in der Innenkontur **145,** während die Konusabschnitte **221',222'** des Abutment **2'** in den komplementären Konusabschnitten **141,142** des Implantats **1** stecken. Die Abutmentbasis **20'** überragt die Implantatschulter **12.** Der konische Schraubenkopf **31'** kommt im komplementären Schraubensitz **230'** zu liegen und der Gewindeschaft **30'** der Abutmentschraube **3'** greift in die Innengewindebohrung **147** im Implantat **1** ein. Die Basisschulter **200'** ist kongruent zur Wölbung der frei bleibenden Implantatschulter **12** geformt, also von anterior nach posterior konvex, wobei der untere Scheitelpunkt **121** auf der posterioren Implantatseite vorzugsweise nach koronal höher vorgesehen ist, als der nach anterior orientierte Scheitelpunkt **121.** Dem angepasst neigt sich auch die Basisschulter **200'** auf der anterioren Seite tiefer nach apikal als auf der posterioren Seite. Für das Abutment **2',** zumindest für die die Implantatschulter **12** überragende Abutmentbasis **20',** wäre die Verwendung von farblich mit den Weichteilen harmonierender Keramik vorteilhaft. Im Patientenmund eingesetzt folgt der Rand der aufgebrachten Zahnkrone **9** der Kontur der Implantatschulter **12** mit einer Versetzung für die Weichteile. Die Implantatschulter **12** könnte bis auf das Knochenniveau gesetzt werden. Tiefliegende Bereiche kommen nach anterior zu liegen, während die erhöhten Bereiche approximal zwischen benachbarten Zähnen positioniert sind.

### Figuren 6A bis 6E

Auch hier besitzt das Implantat **1** die mit dem Aussengewinde **100** versehene Schaftpartie **10,** an die sich ein zur Implantatschulter **12** hin konisch erweiternder Implantathals **11** anschliesst. Die Implantatschulter **12** ist von anterior nach posterior konvex geformt, so dass die erhöhte Kammlinie **120** und die nach anterior und posterior weisenden unteren Scheitelpunkte **121** entstehen. Die Strukturgrenze **110** mit der von der Schaftpartie **10** herkommenden Oberflächenstrukturierung **13** wird erneut am äusseren Rand **124** der Implantatschulter **12** oder darunter liegen. Von der Mündung, welche die Implantatschulter **12** umrandet, erstreckt sich die sacklochförmige Aufnahmebohrung **14** axial in das Implantat **1** hinein. An der Mündung beginnt die Aufnahmebohrung **14** mit einer zirkulären zylindrischen Aussparung **144** an die sich eine nach apikal bis zum Boden **143** erstreckende und im Durchmesser verringerte Zylinderbohrung **140'** anschliesst. Unterhalb des Bodens **143** setzt sich die im Durchmesser erneut reduzierte Innengewindebohrung **147** bis zum Bohrungsgrund **148** fort.

Zum Aufsetzen auf die Implantatschulter **12** ist ein Ring **4** mit komplementär gewölbter Unterkante **40** vorgesehen, der von einem Implantateinsatz **5** mit einer Basisschraube **3** gehalten wird. Der Ring **4** stellt eine Mesiostruktur dar und sollte farblich mit der Umgebung im Patientenmund, d.h. mit den Nachbarzähnen und der Mukosa harmonieren, so dass hierfür z.B. Keramik oder Kunststoff in Betracht kommt. Der Implantateinsatz **5** besitzt oben ein Hülsenstück **50** mit einer nicht-rotationssymmetrischen Innenkontur **55,** vorzugsweise ein Innenvielkant **55.** Unterhalb des Hülsenstücks **50** befindet sich ein hülsenförmiger, zylindrischer Fortsatz **22,** in dem sich der Schraubenkopf **31** der Basisschraube **3** auf einem im Fortsatz **22** eingesetzten Stützring **32** abstützt Der Schraubenkopf **31** hat die Eingriffskontur **310,** die von koronal durch einen axialen Zugang **51** im Implantateinsatz **5** mit einem Eindrehwerkzeug zugänglich ist. Der Schraubenkopf **31** der Basisschraube **3** sowie der Stützring **32** sind von apikaler Richtung in den Fortsatz **22** eingesetzt, wobei der Stützring **32** im Fortsatz **22** fixiert ist. Korrespondierend mit dem konischen Implantathals **11** erweitert sich der Ring **4** nach koronal konisch. Der Ring **4** erweitert sich auch innerlich nach koronal konisch und das Hülsenstück **50** ist äusserlich dazu komplementär gestaltet. Die auf der Implantatschulter **12** aufsitzende Unterkante **40** des Ringes **4** sowie dessen Oberkante **41** sind kongruent zur Implantatschulter **12** geformt, wobei im zusammengesetzten Zustand die Oberkante **41** des Ringes **4** mit der Oberkante **500** des Hülsenstücks **50** bündig abschliesst. Das Hülsenstück **50** liegt im Ring **4,** der Fortsatz **22** ragt in die Zylinderbohrung **140'** innerhalb der Aufnahmebohrung **14** hinein und der Gewindeschaft **30** der Basisschraube **3** greift in die Innengewindebohrung **147** ein. Oberhalb der im Fortsatz **22** sitzenden Basisschraube **3** befindet sich ein hier nicht sichtbares Innengewinde **220** für den Eingriff einer Schraube zum Befestigen eines auf den Implantateinsatz **5** aufgesetzten Abutment.

### Figuren 7A bis 7C

Die Unterschiede am Implantat **1** zur vorherigen Figurengruppe bestehen darin, dass hier der konische Implantathals **11** länger und die radial umlaufende, zylindrische Aussparung **144** tiefer ist. Der als Mesiostruktur im Zahnfleisch zu liegen kommende Ring **4** wurde schmaler gestaltet und am Hülsenstück **50** ist zuunterst ein in die Aussparung **144** passender Zylinderabschnitt **501** vorgesehen, während der obere Teil des Hülsenstück **50** sich komplementär zum Inneren des Rings **4** nach koronal konisch erweitert. Die Breite des Ringes **4** bestimmt sich nach der Einsetztiefe des Implantats **1.** Auf dem längeren Implantathals **11** könnte zusätzlich zur mikrorauhen Oberflächenstrukturierung **13** ein mit dem Aussengewinde **100** an der Schaftpartie **10** korrespondierendes Gewinde **113** vorhanden sein. Die Strukturgrenze **110** könnte wiederum am äusseren Rand **124** der Implantatschulter **12** oder darunter liegen. Im übrigen wird auf die Figurengruppe 6A bis 6E verwiesen.

### Figur 8

Diese Prinzipdarstellung eines Implantat **1** veranschaulicht die Möglichkeit veranschaulichen, dass die Implantatschulter **12** radial, wellenförmig umläuft, wobei erfindungsgemäß die Implantatschulter **12** im Verhältnis zur vertikalen Mittelachse **V** allerorts einen rechten Winkel einnimmt. Somit entstehen auf beiden approximalen Seitenflanken des Implantats **1** jeweils ein oberer Scheitelpunkt **122"** und auf der anterioren sowie posterioren Implantatseite jeweils mittig ein unterer Scheitelpunkt **121".** Der Scheitelpunkt **121"** auf der posterioren Implantatseite liegt vorzugsweise nach koronal höher als jener auf der anterioren Implantatseite. Ist keine der Alternativen gemäss den Figuren 4A, 5A, 6A oder 7A vorgesehen, so wird man die Strukturgrenze **110** der Oberflächenstrukturierung **13** wiederum im Abstand a unterhalb des äusseren Randes **124** der gewölbten Implantatschulter **12** anordnen. An der Schaftpartie **10** ist vorzugsweise ein Aussengewinde **100** vorhanden, während der Implantathals **11** erneut ein korrespondierendes Gewinde **113** aufweisen könnte.

### Figuren 9A bis 9C

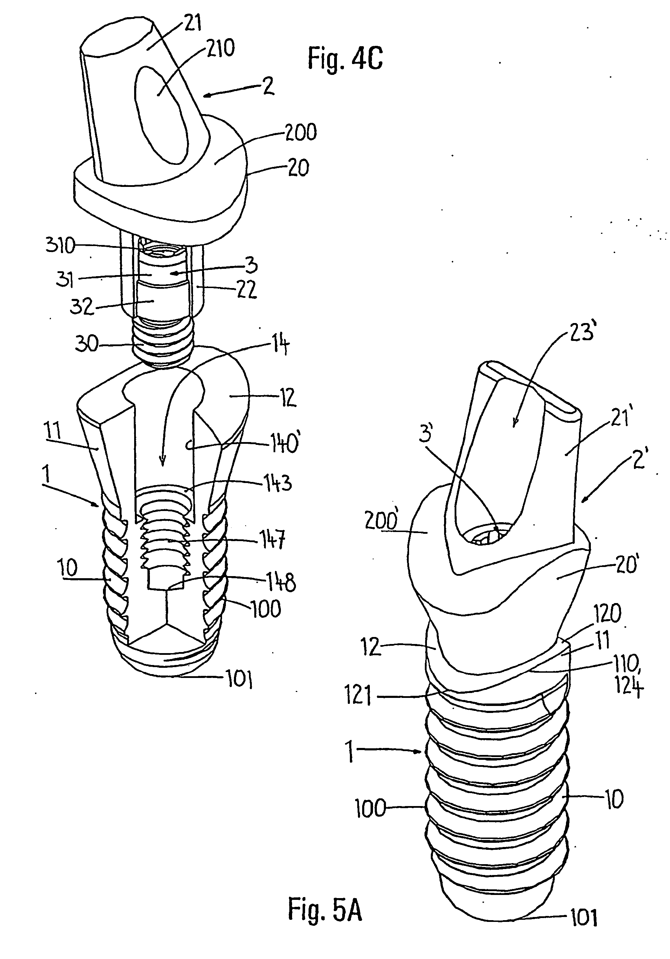

In Abwandlung der Anordnung gemäss den Figuren 4A bis 4C ist hier als oberer Abschluss des konischen oder zylindrischen Implantathalses **11** eine horizontale Implantatschulter **12** vorgesehen, wobei diese auch konisch sein könnte. Intern besitzt das Implantat **1** die sacklochförmige Aufnahmebohrung **14,** die unterhalb der Mündung eine Positionierkontur **149** aufweist, z.B. als umlaufende Verzahnung gestaltet. Unterhalb der Positionierkontur **149** setzt sich koaxial die Zylinderbohrung **140'** bis zum Boden **143** fort, vom dem sich axial nach apikal die Innengewindebohrung **147** bis zum Bohrungsgrund **148** erstreckt. Äusserlich an der Schaftpartie **10** ist das Aussengewinde **100** mit der überlagerten mikrorauhen Oberflächenstrukturierung **13** vorhanden, deren Strukturgrenze **110** vorzugsweise am äusseren Rand **124** der Implantatschulter **12** liegt. Der Implantathals **11** könnte das zum Aussengewinde **100** komplementäre Gewinde **113** aufweisen. Zum Aufsetzen auf die Implantatschulter **12** ist ein Abutment **2"** mit der Scheibe **20"** vorhanden. Von der Scheibe **20"** erstreckt sich nach apikal der vorbeschriebene hülsenförmige Fortsatz **22** mit dem eingesetzten Stützring **32** und der Basisschraube **3;** von der Oberseite **200"** nach koronal erhebt sich der Stumpf **21** mit dem Zugang **210** zur Eingriffskontur **310** im Schraubenkopf **31** (vgl. Figur 4C). Die Scheibe **20"** besitzt einen die Implantatschulter **12** abdeckenden Unterbau **201"** sowie eine gewölbte Dachpartie **202"** mit symmetrischer Neigung von den erhöhten approximalen Seitenflanken zu einer anterior und einer posterior gelegenen Absenkung **203".** Zur Positionierung des Abutment **2"** auf dem Implantat **1** sind am Fortsatz **22** in die Positionierkontur **149** eingreifende Nocken **220"** vorhanden. Im montierten Zustand ragt der Fortsatz **22** in die Zylinderbohrung **140'** hin, der Gewindeschaft **30** der Basisschraube **3** greift in die Innengewindebohrung **147** ein und zieht das mit seiner Absenkung **203"** nach anterior weisende Abutment **2"** auf das Implantat **1.** Voraussetzung für die Realisierbarkeit dieser Anordnung ist, dass der Mikrospalt zwischen der Implantatschulter **12** und dem Unterbau **201"** der Scheibe **20"** unter **1** µm geschlossen werden kann und sich bei Mikrobewegungen nicht darüber vergrössert.

### Figuren 10A und 10B

Für spezielle Applikationen, insbesondere als sogenanntes einphasiges Sofortimplantat nach Zahnextraktion, hat es sich als vorteilhaft erwiesen, das Implantat **1**, welches weiterhin eine Schaftpartie **10** besitzt, unten mit einem zylindrischen Schaftanteil **103** und darüber mit einem sich nach koronal, konisch erweiternden Schaftanteil **104** zu versehen. Damit ergibt sich eine zur Zahnalveole nahezu komplementäre Aussengeometrie. Die Konizität des oberen Schaftanteils **104,** gemessen zur vertikalen Mittelachse **V**, beträgt z.B. 12°. Die konische Implantatschulter **12** ist horizontal angeordnet und auch die Strukturgrenze **110** verläuft horizontal. Die Strukturgrenze **110** liegt unterhalb der Implantatschulter **12** mit dem Abstand a von z.B. 1.8 mm. An der Implantatspitze **101** ist wiederum eine Spannut **102** des Aussengewindes **100** erkennbar, das sich über die gesamte Schaftpartie **10** erstreckt und am apikalen Ende selbstschneidend ist. Dem Aussengewinde **100** ist typischer weise eine mikrorauhe Oberflächenstrukturierung **13** überlagert, welche sich bis zur Strukturgrenze **110** erstreckt. Der zwischen der Strukturgrenze **110** und der Implantatschulter **12** liegende Implantathals **11** ist vorzugsweise maschinenglatt.

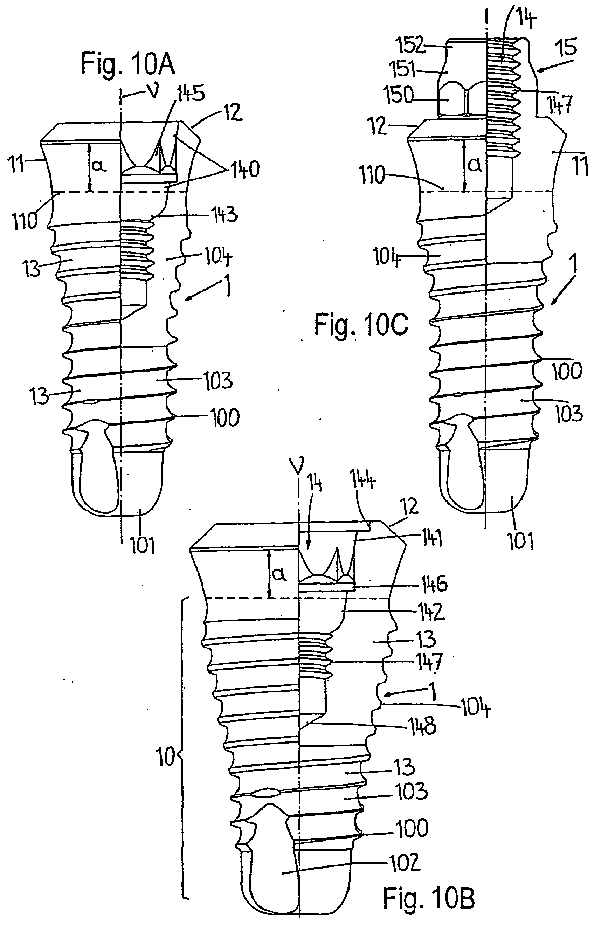

Die Innenkonfiguration stimmt - bis auf die in Figur 10A fehlende zylindrische Aussparung **144 -** mit der Figur 2D überein. Die von koronal axial nach apikal verlaufende sacklochförmige Aufnahmebohrung **14** unterteilt sich in mehrere unterschiedliche Zonen und erstreckt sich von der Mündung, welche von der Implantatschulter **12** umgeben ist. Oben besitzt die Aufnahmebohrung **14** eine sich nach koronal erweiternde Konusaufnahme **140,** innerhalb der die nicht-rotationssymmetrische Innenkontur **145 -** erneut in Gestalt eines Innenvielkants **145 -** vorgesehen ist. Unterhalb der Innenkontur **145** befindet sich die zirkuläre Ringnut **146,** die bei der spanenden Herstellung der Innenkontur **145** zweckmässig ist. Der Innenvielkant **145** läuft parabelförmig nach oben hin in Spitzen aus, wobei darüber und darunter unterbrechungslose, zueinander fluchtende Konusabschnitte **141,142** vorhanden sind. Unten endet die Konusaufnahme **140** mit dem Boden **143,** von wo die Aufnahmebohrung **14** in eine koaxiale, im Durchmesser reduzierte Innengewindebohrung **147** übergeht, die sich axial weiter nach apikal bis zum Bohrungsgrund **148** erstreckt.

Für die variierenden anzutreffenden Einsatzbedingungen wird das Implantat **1** in adäquaten Durchmessern und Längen angeboten.

### Figur 10C

Abweichend zu den beiden Vorgängerfiguren ist hier die Innenkonfiguration des Implantathalses **11** mit dem die Implantatschulter **12** überragenden, axial austretenden Verbindungskopf **15.** Der Verbindungskopf **15** hat in der gezeigten speziellen Ausführungsform einen Aussenvielkant **150,** der nach oben in einen sich verjüngenden Konusabschnitt **151** übergeht und zuoberst mit einem zylindrischen Führungsabschnitt **152** endet. Von koronal zugänglich, erstreckt sich die Aufnahmebohrung **14** mit dem Innengewinde **147** in den Implantathals **11** hinein. Die Strukturgrenze **110** verläuft wiederum horizontal im Abstand a unterhalb der Implantatschulter **12.**

## Patentansprüche

1. Enossales Dentalimplantat (1) mit anatomisch angepasster Konfiguration, wobei
a) das Implantat (1) aufweist:
aa) eine sich nach apikal erstreckende Schaftpartie (10), an der ein Aussengewinde (100) vorhanden sein kann, und die zuunterst mit der Implantatspitze (101) abschliesst,
ab) einen an die Schaftpartie (10) ansetzenden Implantathals (11), der zu oberst mit einer Implantatschulter (12) abschliesst, wobei das Implantat (1) eine sich von koronal axial nach apikal erstreckende sacklochförmige Aufnahmebohrung (14) aufweist, deren Mündung von der Implantatschulter (12) umrandet ist;
die Aufnahmebohrung (14) oben eine sich nach koronal erweiternde Konusaufnahme (140) und darunter eine Innengewindebohrung (147) aufweist;
innerhalb der Konusaufnahme (140) eine nicht-rotationssymmetrische Innenkontur (145), vorhanden ist.
ac) zur Begünstigung der Osseointegration eine additive und/oder nicht additive Oberflächenstrukturierung (13), die sich über die Schaftpartie (10) bis zu einer Strukturgrenze (110) erstreckt; und
b) das Implantat (1) zum Einsetzen in einen Kieferknochen bestimmt ist, da durch **gekennzeichnet**, dass
c) die Implantatschulter (12) radial wellenförmig umlaufend von anterior nach posterior konvex sowie über die approximale Erstreckung konkav geformt ist, wodurch auf beiden approximalen Seitenflanken jeweils ein oberer Scheitelpunkt (122) und auf der anterioren sowie posterioren Implantatseite jeweils mittig ein unterer Scheitelpunkt (121) entstehen, wobei der Scheitelpunkt (121) auf der posterioren Implantatseite vorzugsweise nach koronal höher liegt als der Scheitelpunkt (121) auf der anterioren Implantatseite; und
d) die Implantatschulter (12) mit der vertikalen Mittelachse des Implantats (1): allerorts einen rechten Winkel einnimmt, sich also horizontal erstreckt.

2. Implantat (1) nach Anspruch 1, **dadurch gekennzeichnet, dass**
a) die Strukturgrenze (110) der Oberflächenstrukturierung (13) auf dem Implantathals (11) liegt; und
b) die Strukturgrenze (110) von der approximalen Erstreckung bogenförmig nach anterior in apikale Richtung abfällt.

3. Implantat (1) nach Anspruch 1 oder 2, **dadurch gekennzeichnet, dass**
a) die Strukturgrenze (110) von der approximalen Erstreckung bogenförmig nach anterior und posterior in apikale Richtung abfällt; und
b) somit die Strukturgrenze (110) auf den beiden approximalen Flanken des Implantats
(1) sowie auf dessen anteriorer und posteriorer Seite symmetrisch zueinander verläuft.

4. Implantat (1) nach einem der Ansprüche 1 bis 3, **dadurch gekennzeichnet, dass**
a) die Strukturgrenze (110) dem Verlauf des äusseren Randes (124) der Implantatschulter (12) in gleichmässigem Abstand (a) folgt;
b) der Abstand (a) vorzugsweise 1.0 mm bis 2.0 mm beträgt; und
c) zur Verminderung des anterioren-posterioren Masses im Bereich der Implantatschulter (12) auf der anterioren und posterioren Seite des Implantats (1), vorzugsweise über den Abstand (a), Material abgetragen ist.

5. Implantat (1) nach einem der Ansprüche 1 bis 4, **dadurch gekennzeichnet, dass**
a) das dieses aus Titan oder einer Titanbasis-Legierung besteht;
b) die Oberflächenstrukturierung (13) besteht aus:
ba) einen Materialauftrag, z. B. aufgesprühtes Titanplasma, oder
bb) einen Materialabtrag, z. B. durch chemische oder elektrochemische Behandlung mit eventuellem zusätzlichen Strahlen, z. B. mittels Korund, oder
bc) einen Materialabtrag durch spanende Behandlung, oder
bd) eine Materialverformung, z. B. Einprägen, oder
be) einer Kombination aus mehreren der vier vorgenannten Behandlungen;
c) oberhalb der Strukturgrenze (110) der Implantathals (11) bis zur Implantatschulter (12) im Prinzip glatt ist; und
d) die Oberflächenstrukturierung (13) an der Schaftpartie (10) und am Implantathals (11) verschieden sein können; wobei
e) zur Oberflächenstrukturierung (13) am Implantathals (11) ein Gewinde (113), insbesondere einmehrgängiges Aussengewinde, hinzukommen kann, das mit der Steigung des als Option an der Schaftpartie (10) vorhandenen Aussengewindes (100) korrespondiert und vorzugsweise eine Gewindetiefe von 0.2 mm bis 0.3 mm besitzt.

6. Implantat (1) nach einem der Ansprüche 1 bis 5, **dadurch gekennzeichnet, dass**
a) die Schaftpartie (10) zylindrisch ist;
b) der Implantathals (11) sich nach koronal konisch erweitert; und
c) an der Schaftpartie (10) ein selbst-schneidendes Aussengewinde (100) vorhanden ist.

7. Implantat (1) nach Anspruch 1, **dadurch gekennzeichnet, dass**
a) ein auf die Implantatschulter (12) aufsetzbares und fixierbares Abutment (2) als Träger für eine Suprakonstruktion vorgesehen ist; wobei das Abutment (2)
b) eine Scheibe (20) besitzt und einen nach koronal ragenden Stumpf (21) zur Verankerung der Suprakonstruktion aufweisen kann;
c) zumindest die Scheibe (20), vorzugsweise aus einer farblich mit Nachbarzähnen und der Mukosa harmonierenden Keramik oder Kunststoff besteht; und
d) mittels einer Basisschraube (3), deren Gewindeschaft (30) in die im Implantat (1) vorhandene Innengewindebohrung (147) eingreift, auf der Implantatschulter (12) aufsitzend, fixierbar ist.

8. Implantat (1) nach Anspruch 7, **dadurch gekennzeichnet, dass**
a) das Abutment (2) unterhalb der Scheibe (20) einen hülsenförmigen Fortsatz (22) besitzt;
b) im Fortsatz (22) sich der Schraubenkopf (31) der Basisschraube (3) auf einem Stützring (32) abstützt;
c) der Schraubenkopf (31) eine Eingriffskontur (310) aufweist, die von koronal durch das Abutment (2) durch einen Zugang (210) mit einem Eindrehwerk zeug erreichbar ist;
d) der Schraubenkopf (31) der Basisschraube (3) sowie der Stützring (32) von apikaler Richtung in den Fortsatz (22) eingesetzt sind; und
e) der Stützring (32) im Fortsatz (22) fixiert ist.

9. Implantat (1) nach Anspruch 1, **dadurch gekennzeichnet, dass** die Innenkontur als Innenvielkant (145) ausgebildet ist;
zum Einsetzen in die Aufnahmebohrung (14) ein Abutment(2') vorgesehen ist, das aufweist:
einen zur Konusaufnahme (140) und der Innenkontur (145) komplementären Fortsatz (22') mit einer passenden äusseren Gegenkontur (225'), vorzugsweise ein Aussenvielkant;
eine den Fortsatz (22') nach koronal verlängernde und sich verdickende Abutmentbasis (20');dc) einen sich von der Abutmentbasis (20') erhebenden Stumpf (21'), der von einer oben auf der Abutmentbasis (20') gelegenen Basisschulter (200') umgeben wird, auf welche die zu schaffende Zahnkrone (9) direkt oder indirekt aufsitzt; und
dd) einen axialen Schraubendurchgang (23') mit einem intern gelegenen Schraubensitz (230'), die zur Aufnahme einer von koronal einsetzbaren Abutmentschraube (3') mit ihrem Schraubenkopf (31') vorgesehen sind, wobei der Gewindeschaft (30') der Abutmentschraube (3') zum Eingreifen in die Innengewindebohrung (147) im Implantat (1) bestimmt ist.

10. Implantat (1) nach Anspruch 9, **dadurch gekennzeichnet, dass**
a) die Basisschulter (200') im kongruenten Abstand zur Implantatschulter (12) geformt ist oder auf der posterioren Implantatseite erhöht ist;
b) der Implantathals (11) an der Implantatschulter (12) im Prinzip zylindrisch endet; und
c) die Strukturgrenze (110) für die Oberflächenstrukturierung (13) an der Implantatschulter (12) oder darunter gelegen endet.

## Claims

1. Enossal dental implant (1) with anatomically adapted configuration, wherein the implant (1) includes:
aa) an apically extending shaft portion (10) on which an external thread (100) can be present and which ends at the bottom with the implant tip (101),
ab) an implant neck (11) bordering on the shaft portion (10) and ending at the top with an implant shoulder (12),
the implant (1) having a location hole (14) in the form of a blind hole, extending from coronally axial to apical, whose orifice is surrounded by the implant shoulder (12)
the location hole (14) having, at the top, a cone location hole (140) enlarged in the coronal direction and, below it, an internal tapped hole (147),
a rotationally non-symmetrical inner contour (145) being present within the cone location hole (140),
ac) for promoting osseointegration, an additive and/or non-additive surface structuring (13) which extends over the shaft portion (10) up to a structural border (110), and
b) the implant (1) is designed to be implanted in a jaw bone, **characterized in that**
c) the implant shoulder (12) is radially wave like shaped in a circular manner, being convex from anterior to posterior and concave over the approximal extension, whereby on each of the approximal side edges a respective upper vertex (122) is formed and a respective lower vertex (121) is formed centrally on the anterior and posterior implant side, wherein the vertex (121) on the posterior implant side being preferably higher in the coronal direction than the vertex (121) on the anterior implant side; and
d) the implant shoulder (12) forms with the vertical central axis of the implant (1): everywhere a right angle, i. e. extends horizontally.

2. Implant (1) according to Claim 1, **characterized in that**
a) the structural border (110) of the surface structuring (13) is positioned on the implant neck (11); and
b) the structural border (110) is lowered in arch shape from the approximal extension towards the anterior in the apical direction,

3. Implant (1) according to Claim 1 or 2, **characterized in that**
a) the structural border (110) is lowered in arch shape from the approximal extension towards the anterior and the posterior in the apical direction; and
b) therefore the structural border (110) runs symmetrically on both approximal edges of the implant (1) and on its anterior and posterior side.

4. Implant (1) according to one of the Claims 1 through 3, **characterized in that**
a) the structural limit (110) follows the course of the outer rim (124) of the implant shoulder (12) at an equal distance (a);
b) the distance (a) is preferably 1.0 mm to 2.0 mm; and
c) to reduce the anterior-posterior dimension in the area of the implant shoulder (12), material is abraded on the anterior and posterior side of the implant (1), preferably over the distance (a).

5. Implant (1) according to one of the Claims 1 through 4, **characterized in that**
a) it consists of titanium or a titanium-based alloy;
b) the surface structuring (13) consists of:
ba) a material coating, e. g. sprayed-on titanium plasma,
or
bb) a material abrasion, e. g. by chemical or electrochemical treatment, if applicable, with additional blasting, e. g. by means of corundum, or
bc) a material abrasion by machining, or
bd) a material deformation, e. g. engraving, or
be) a combination of several of the four above-mentioned treatments;
c) above the structural border (110), the implant neck (11) is substantially smooth up to the implant shoulder (12); and
d) the surface structuring (13) can be different on the shaft portion (10) and on the implant neck (11); where
e) for surface structuring (13) on the implant neck (11), a thread (113), in particular a multiple external thread, can be added which corresponds with the pitch of the external thread (100) present optionally on the shaft portion (10) and preferably has a thread depth of 0.2 mm to 0.3 mm.

6. Implant (1) according to one of the Claims 1 through 5, **characterized in that**
a) the shaft portion (10) is cylindrical;
b) the implant neck (11) is conically enlarged in the coronal direction; and
c) a self-tapping external thread (100) is present on the shaft portion (10).

7. Implant (1) according to Claim 1, **characterized in that**
a) an abutment (2) placeable and fixable on the implant shoulder (12) is provided as a carrier for a supraconstruction; wherein the abutment (2)
b) has a disk (20) and can possess a stub (21) protruding in the coronal direction for anchorage of the supraconstruction;
c) at least the disk (20) preferably consists of ceramic or plastics which harmonize in color with neighboring teeth and the mucosa; and
d) the abutment can be fixed by means of a base screw (3) whose threaded shaft (30) engages the internal tapped hole (147) within the implant (1), resting on the implant shoulder (12).

8. Implant (1) according to Claim 7, **characterized in that**
a) the abutment (2) has a sleeve-shaped extension (22) underneath the disk (20);
b) in the extension (22), the screw head (31) of the base screw (3) is supported by a bearing ring (32);
c) the screw head (31) has an engagement contour (310) which can be reached with a screwing tool through an access (210) from the coronal side through the abutment (2);
d) the screw head (31) of the base screw (3) and the bearing ring (32) are inserted in the extension (22) from the apical direction, and
e) the bearing ring (32) is fixed inside the extension (22).

9. Implant (1) according to Claim 1, **characterized in that** the inner contour is formed as a polyhedral socket (145),
wherein
for insertion in the location hole (14), an abutment (2') is provided having:
an extension (22') complimentary to the cone location hole (140) and the inner contour (145), having a corresponding external counter contour (225'), preferably an external poly-hedron;
an abutment base (20') lengthening the extension (22') and thickening in the coronal direction; dc) a stub (21') rising from the abutment base (20') and surrounded by a base shoulder (200') located on top of the abutment base (20') on which shoulder the dental crown (9) to be produced rests directly or indirectly; and dd) an axial screw passage (23') with an internal screw seat (230') which are designed to receive an abutment screw (3') with its screw head (31') which can be inserted from the coronal side, the threaded shaft (30') of the abutment screw (3') being designed to engage the internal tapped hole (147) in the implant (1).

10. Implant (1) according to Claim 9, **characterized in that**
a) the base shoulder (200') is formed with a congruent distance to the implant shoulder (12) or raised on the posterior implant side;
b) the implant neck (11) ends at the implant shoulder (12) substantially cylindrically; and
c) the structural limit (110) for the surface structuring (13) ends at the implant shoulder (12) or below it.

## Revendications

1. Implant dentaire intraosseux (1) ayant une configuration anatomiquement adaptée, dans lequel l'implant (1) présente :
aa) une partie de tige (10) s'étendant vers l'apex, sur laquelle un filetage extérieur (100) peut être présent, et qui se termine tout en bas par la pointe d'implant (101),
ab) un col d'implant (11), se raccordant à la partie de tige (10), qui se termine tout en haut par un épaulement d'implant (12),
l'implant (1) présentant un alésage de réception (14), sous forme d'un trou borgne s'étendant de manière axiale de la couronne vers l'apex, dont l'embouchure est bordée par l'épaulement d'implant (12) ;
l'alésage de réception (14) présentant au-dessus un logement conique (140) s'élargissant vers la couronne et un taraudage intérieur (147) situé en dessous ;
un contour intérieur (145) ne présentant pas une symétrie de rotation étant présent à l'intérieur du logement conique (140),
ac) une structuration superficielle (13) additionnelle et/ou non additionnelle, qui s'étend sur la partie de tige (10) jusqu'à une limite de structure (110), afin de favoriser l'ostéo-intégration, et
b) l'implant (1) est conçu pour être inséré dans un os maxillaire, **caractérisé en ce que**
c) l'épaulement d'implant (12) est formé de manière convexe de l'avant vers l'arrière en étant circulairement radialement ondulé, ainsi que formé de manière concave sur l'extension approximale, un sommet supérieur (122) apparaissant respectivement sur deux flancs latéraux approximaux et un sommet inférieur (121) apparaissant respectivement au milieu sur les faces d'implant antérieure et postérieure, le sommet (121) situé sur la face d'implant postérieure se trouvant de préférence plus haut vers la couronne que le sommet (121) situé sur la face d'implant antérieure, et
d) l'épaulement d'implant (12) décrit par rapport à l'axe médian vertical de l'implant (1) : un angle droit, en tous lieux, et s'étend donc de manière horizontale.

2. Implant (1) selon la revendication 1, **caractérisé en ce que**
a) la limite de structure (110) de la structuration superficielle (13) se situe sur le col d'implant (11), et
b) la limite de structure (110) décroît selon une forme d'arc en direction apicale depuis l'extension approximale vers l'avant.

3. Implant (1) selon la revendication 1 ou 2, **caractérisé en ce que**
a) la limite de structure (110) décroît selon une forme d'arc en direction apicale depuis l'extension approximale vers l'avant et vers l'arrière, et
b) la limite de structure (110) passe ainsi sur les deux flancs approximaux de l'implant (1) ainsi que sur leurs faces antérieure et postérieure, de manière symétrique les uns par rapport aux autres.

4. Implant (1) selon l'une quelconque des revendications 1 à 3, **caractérisé en ce que**
a) la limite de structure (110) suit le tracé du bord extérieur (124) de l'épaulement d'implant (12) à un intervalle régulier (a),
b) l'intervalle (a) est de préférence de 1,0 mm à 2,0 mm, et
c) de la matière est enlevée sur les faces antérieure et postérieure de l'implant (1), de préférence dans l'intervalle (a), afin de diminuer la masse antérieure-postérieure dans le secteur de l'épaulement d'implant (12).

5. Implant (1) selon l'une quelconque des revendications 1 à 4, **caractérisé en ce que**
a) celui-ci est constitué de titane ou d'un alliage à base de titane,
b) la structuration superficielle (13) consiste en :
ba) un apport de matière, par exemple du plasma de titane pulvérisé, ou
bb) un enlèvement de matière, par exemple par traitement chimique ou électrochimique avec un sablage supplémentaire éventuel, par exemple avec du corindon, ou
bc) un enlèvement de matière grâce à un traitement par enlèvement de copeaux, ou
bd) une déformation de matière, par exemple un estampage,
ou
bc) une combinaison de plusieurs des quatre traitements cités ci-dessus,
c) le col d'implant (11) est en principe lisse au-dessus de la limite de structural (110) jusqu'à l'épaulement d'implant (12), et
d) les structurations superficielles (13) dans la partie de tige (10) et sur le col d'implant (11) peuvent être différentes,
e) un filetage (113), en particulier un filetage extérieur à plusieurs filets, qui correspond au pas du filetage extérieur (100) présent optionnellement sur la partie de tige (10) et possède de préférence une profondeur de filet de 0,2 mm à 0,3 mm, pouvant suffire à la structuration superficielle (13) sur le col d'implant (11).

6. Implant (1) selon l'une quelconque des revendications 1 à 5, **caractérisé en ce que**
a) la partie de tige (10) est cylindrique,
b) le col d'implant (11) s'élargit de manière conique vers la couronne, et
c) un filetage extérieur (100) autotaraudeur est présent sur la partie de tige (10).

7. Implant (1) selon la revendication 1, **caractérisé en ce que**
a) une butée (2) pouvant être positionnée et pouvant être fixée sur l'épaulement d'implant (12) est prévue en tant que support d'une supraconstruction, la butée (2)
b) possédant un plateau (20) et pouvant présenter un tronc (21) saillant vers la couronne, pour l'ancrage de la supraconstruction,
c) au moins le plateau (20) étant constitué de préférence d'une céramique ou d'une matière plastique s'harmonisant en couleur avec les dents voisines et la muqueuse, et
d) pouvant être fixée, position assise sur l'épaulement d'implant (12), grâce à une vis de base (3), dont la tige filetée (30) est en prise dans le taraudage intérieur (147) présent dans l'implant (1).

8. Implant (1) selon la revendication 7, **caractérisé en ce que**
a) la butée (2) possède, en dessous du plateau (20), une extension an forme de douille (22),
b) la tête de vis (31) de la vis de base (3) s'appuie sur une bague d'appui (32) dans l'extension (22),
c) la tête de vis (31) présente un contour de mise en prise (310), qui peut être atteint depuis la couronne par un outil de vissage grâce à un accès (210) à travers la butée (2),
d) la tête de vis (31) de la vis de base (3) ainsi que la bague d'appui (32) sont insérées dans l'extension (22) dans une direction apicale, et
e) la bague d'appui (32) est fixée dans l'extension (22).

9. Implant (1) selon la revendication 1, **caractérisé en ce que** le contour intérieure est réalisé sous la forme d'un polyèdre intérieur (145) ;
une butée (2') est prévue pour une insertion dans l'alésage de réception (14), qui présente :
une extension (22') complémentaire au logement conique (140) et au contour intérieur (145), comprenant un contre-contour extérieur (225') adapté, de préférence un polyèdre extérieur,
une base de butée (20') prolongeant l'extension (22') vers la couronne et s'épaississant, dc) un tronc (21'), s'érigeant depuis la base de butée (20'), qui est entouré par un épaulement de base (200') agencé par-dessus la base de butée (20'), sur lequel la couronne dentaire (9) à créer s'appuie directement ou indirectement, et dd) un passage de vis (23') axial avec un siège de vis (230') agencé à l'intérieur, qui sont prévus pour l'accueil d'une vis de butée (3'), pouvant être insérée depuis la couronne, avec sa tête de vin (31'), la tige filetée (30') de la vis de butée (3') étant conçue pour être en prise dans le taraudage intérieur (147) de l'implant (1).

10. Implant (1) selon la revendication 9, **caractérisé en ce que**
a) l'épaulement de base (200') est formé à une distance congruente de l'épaulement d'implant (12), ou est surélevé sur la face d'implant postérieure,
b) le col d'implant (11) se termine en principe de manière cylindrique au niveau de l'épaulement d'implant (12), et
c) la limite de structure (110) de la structuration (13) des surfaces se termine au niveau de l'epaulement d'implant (12) ou en dessous de celui-ci.
